# EUROPEAN PATENT APPLICATION

(11) **EP 4 625 367 A1**
(43) Date of publication of application: **01.10.2025**
(21) Application number: 23905928.0
(22) Date of filing: 19.12.2023
(51) Int. Cl.: G06V 30/146, G06V 30/14

(54) **IMAGE RECOGNITION METHOD AND RELATED DEVICE**

(30) Priority: 20.12.2022 CN 202211640349
(71) Applicant: Huawei Technologies Co., Ltd., Shenzhen, Guangdong 518129 (CN)
(72) Inventor: XIAO, Lan, Shenzhen, Guangdong 518129 (CN); LI, Ting, Shenzhen, Guangdong 518129 (CN); LIU, Liu, Shenzhen, Guangdong 518129 (CN); LIN, Weiyue, Shenzhen, Guangdong 518129 (CN)
(74) Representative: Isarpatent
(86) International application number: PCT/CN2023/139746
(87) International publication number: WO 2024/131765

(57) **Abstract**

An image recognition method includes: outputting a first reminder, where the first reminder indicates a user to establish a location association between an auxiliary part and a to-be-recognized object, and control a terminal to photograph the auxiliary part, and when the auxiliary part exists in a shot first image and a target object whose location relationship with the auxiliary part meets a first preset condition exists in the first image, obtaining a recognition result of the target object based on a captured second image, where the first image and the second image are images in a video stream that is shot by the user controlling the terminal after the first reminder is output, and capture time of the second image is later than that of the first image. According to this application, the user is prompted to establish the location association between the auxiliary part and the to-be-recognized object. This reduces action costs of the user and increases efficiency of recognition.

## Description

This application claims priority to Chinese Patent Application No. 202211640349.2, filed with the China National Intellectual Property Administration on December 20, 2022 and entitled "IMAGE RECOGNITION METHOD AND RELATED DEVICE", which is incorporated herein by reference in its entirety.

### TECHNICAL FIELD

This application relates to the field of image processing, and in particular, to an image recognition method and a related device.

### BACKGROUND

In daily life, a visually impaired person has the need to recognize a lot of text information in a near-field environment, for example, recipient information on a shipping label, and a name, usage, and a dosage on a package insert. Currently, the visually impaired person can obtain near-field text information via a terminal device by using an optical character recognition (optical character recognition, OCR) technology and a text to speech (text to speech, TTS) technology. However, when using information recognition software that is provided with the OCR technology and the TTS technology, the visually impaired person still cannot take a photo, cannot take a photo completely, or cannot take a photo clearly due to lack of visual feedback information.

Therefore, in conventional technologies, it begins to explore how to help the visually impaired person accurately and completely read text information in a to-be-recognized area via an image capture device. In an existing implementation, an integrity of a file in a current picture is monitored in real time, to calculate a direction and a distance in and by which a user needs to move a mobile phone, and guide the user via voice.

However, the user needs to move at four degrees of freedom (three degrees of freedom of displacement and one degree of freedom of turn), for example, "move forward by 1 foot" and "move left by 1 foot", and "turn toward a direction of five o'clock". During moving, the user is prone to deviation from a target, and an error rate is high. A blind user cannot accurately quantify a moving distance and a turning angle of the user, and cannot make a precise action in a guide, sometimes increasing a degree of deviation from the target.

### SUMMARY

According to a first aspect, this application provides an image recognition method. The method includes: outputting a first reminder, where the first reminder indicates a user to establish a location association between an auxiliary part and a to-be-recognized object, and control a terminal to photograph the auxiliary part; and when the auxiliary part exists in a shot first image and a target object whose location relationship with the auxiliary part meets a first preset condition exists in the first image, obtaining a recognition result of the target object based on a captured second image, where the first image and the second image are images in a video stream that is shot by the user controlling the terminal after the first reminder is output, and capture time of the second image is later than that of the first image.

According to this application, the user is prompted to establish the location association between the auxiliary part and the to-be-recognized object. Because the visually impaired user can sense, through proprioception, a location relationship between the auxiliary part and the to-be-recognized object, and a location relationship between the auxiliary part and the terminal device, spatial alignment between the terminal and the to-be-recognized object in three degrees of freedom can be maintained, and only a location of the terminal in a vertical direction needs to be adjusted. This reduces action costs of the user and increases efficiency of recognition.

In addition, the auxiliary part is used as an anchor point, the auxiliary part is recognized in a computer vision manner, and an area having a spatial relationship with the auxiliary part is defined as an area of interest. The visually impaired user can quickly locate, via a handheld device through a habitual interaction action of recognizing a text in daily life and proprioception of the visually impaired user, an area that needs to be recognized. In addition, this application significantly increases recognition efficiency in a scenario in which there are a plurality of targets and a scenario in which a background is disordered.

In a possible implementation, the auxiliary part is a hand.

In a possible implementation, the first preset condition includes at least one of the following: The target object overlaps the auxiliary part; the target object is in a direction indicated by the auxiliary part; and the target object is an object that is closest to the auxiliary part in a plurality of objects included in the first image.

In a possible implementation, the video stream further includes a third image whose capture time is earlier than that of the first image; and the method further includes: outputting a second reminder when the target object that meets the first preset condition does not exist in the third image, where the second reminder indicates the user to cancel the location association between the auxiliary part and the to-be-recognized object or move the auxiliary part toward an edge of the to-be-recognized object; and the capture time of the second image is later than the outputting a second reminder.

In a possible implementation, the method further includes: outputting a third reminder when a picture of the target object in the first image is incomplete or unclear, where the third reminder indicates the user to control the terminal to move away from or close to the to-be-recognized object; and the capture time of the second image is later than the outputting a third reminder.

In a possible implementation, the method further includes: outputting a fourth reminder based on a pose difference if a difference between a posture of the terminal when the terminal moves away from or close to the to-be-recognized object and a posture of the terminal before the terminal moves away from or close to the to-be-recognized object is greater than a threshold, where the fourth reminder indicates the user to control the terminal to perform posture adjustment, and an adjustment amount of the posture adjustment is related to the pose difference.

When an object is photographed, there is a spatial range formed by relative locations and angles of a camera and a file that needs to be photographed. In this spatial range, information on a photo taken by the camera may be well recognized. As described above, when the user is guided to move the shooting device to take a photo of the object completely, each person has an operation habit or the shooting device is not stable during moving, a terminal posture is different from an initial terminal posture, and the shooting device cannot reach a target location by moving up and down. Therefore, it is necessary to guide the user to restore the terminal posture.

In the deviation correction process, if it is detected that a posture change of the terminal exceeds a specific angle, the user is prompted to perform correction again. In the adjustment process, when the user performs an incorrect action, the user is prompted in time, to reduce a probability of an error of the user, and can stop loss in time when the error is large, and start again, to avoid endless deviation correction.

In a possible implementation, the to-be-recognized object is a planar object, and the first reminder specifically indicates the user to cover the to-be-recognized object with the auxiliary part; or the to-be-recognized object is a stereoscopic object, and the first reminder specifically indicates the user to pick up the to-be-recognized object with the auxiliary part or cover one surface of the stereoscopic object with the auxiliary part.

In a possible implementation, the method further includes: outputting a fifth reminder when the auxiliary part exists in the shot first image and the target object whose location relationship with the auxiliary part meets the first preset condition exists in the first image, where the fifth reminder indicates the user to cancel the location association between the auxiliary part and the to-be-recognized object; and the capture time of the second image is later than the outputting a fifth reminder.

In a possible implementation, the target object is a screen, and the terminal includes a touch component; the recognition result is text content corresponding to a target control on the screen; and the method further includes: outputting the text content, and receiving a selection of the user for the target control; and outputting a sixth reminder based on a relative location between the touch component and the target control, where the sixth reminder indicates the user to control the terminal to perform location adjustment until the touch component is in contact with the target control, and an adjustment amount of the location adjustment is related to the relative location.

In a possible implementation, the touch component is a support attached to a back of the terminal or a corner of the terminal.

According to a second aspect, this application provides an image recognition apparatus. The apparatus includes:
an output module, configured to output a first reminder, where the first reminder indicates a user to establish a location association between an auxiliary part and a to-be-recognized object, and control a terminal to photograph the auxiliary part; and
a recognition module, configured to: when the auxiliary part exists in a shot first image and a target object whose location relationship with the auxiliary part meets a first preset condition exists in the first image, obtain a recognition result of the target object based on a captured second image, where
the first image and the second image are images in a video stream that is shot by the user controlling the terminal after the first reminder is output, and capture time of the second image is later than that of the first image.

In a possible implementation, the auxiliary part is a hand.

In a possible implementation, the first preset condition includes at least one of the following:
the target object overlaps the auxiliary part;
the target object is in a direction indicated by the auxiliary part; and
the target object is an object closest to the auxiliary part in a plurality of objects included in the first image.

In a possible implementation, the video stream further includes a third image whose capture time is earlier than that of the first image; and the output module is further configured to:
output a second reminder when the target object that meets the first preset condition does not exist in the third image, where the second reminder indicates the user to cancel the location association between the auxiliary part and the to-be-recognized object or move the auxiliary part toward an edge of the to-be-recognized object; and
the capture time of the second image is later than outputting the second reminder.

In a possible implementation, the output module is further configured to:
output a third reminder when a picture of the target object in the first image is incomplete or unclear, where the third reminder indicates the user to control the terminal to move away from or close to the to-be-recognized object; and
the capture time of the second image is later than outputting the third reminder.

In a possible implementation, the output module is further configured to:
output a fourth reminder based on a pose difference if a difference between a posture of the terminal when the terminal moves away from or close to the to-be-recognized object and a posture of the terminal before the terminal moves away from or close to the to-be-recognized object is greater than a threshold, where the fourth reminder indicates the user to control the terminal to perform posture adjustment, and an adjustment amount of the posture adjustment is related to the pose difference.

In a possible implementation,
the to-be-recognized object is a planar object, and the first reminder specifically indicates the user to cover the to-be-recognized object with the auxiliary part; or
the to-be-recognized object is a stereoscopic object, and the first reminder specifically indicates the user to pick up the to-be-recognized object with the auxiliary part or cover one surface of the stereoscopic object with the auxiliary part.

In a possible implementation, the output module is further configured to:
output a fifth reminder when the auxiliary part exists in the shot first image and the target object whose location relationship with the auxiliary part meets the first preset condition exists in the first image, where the fifth reminder indicates the user to cancel the location association between the auxiliary part and the to-be-recognized object; and
the capture time of the second image is later than outputting the fifth reminder.

In a possible implementation, the target object is a screen, and the terminal includes a touch component; the recognition result is text content corresponding to a target control on the screen; and the output module is further configured to:
output the text content;
the apparatus further includes a receiving module, configured to receive a selection of the user for the target control; and
the output module is further configured to:
   output a sixth reminder based on a relative location between the touch component and the target control, where the sixth reminder indicates the user to control the terminal to perform location adjustment until the touch component is in contact with the target control, and an adjustment amount of the location adjustment is related to the relative location; and
   according to the target control.

In a possible implementation, the touch component is a support attached to a back of the terminal or a corner of the terminal.

According to a third aspect, this application provides an image recognition device, including a processor, a memory, a camera, and a bus, where the processor, the memory, and the camera are connected through the bus;
the camera is configured to capture a video in real time;
the memory is configured to store a computer program or instructions; and
the processor is configured to invoke or execute the program or the instructions stored in the memory, and is further configured to invoke the camera, to implement the steps according to any one of the first aspect or the possible implementations of the first aspect.

According to a fourth aspect, this application provides a computer storage medium, including computer instructions. When the computer instructions are run on an electronic device or a server, the steps according to any one of the first aspect and the possible implementations of the first aspect are performed.

According to a fifth aspect, this application provides a computer program product. When the computer program product runs on an electronic device or a server, the steps according to any one of the first aspect and the possible implementations of the first aspect are performed.

According to a sixth aspect, this application provides a chip system. The chip system includes a processor, configured to support an execution device or a training device to implement functions in the foregoing aspects, for example, send or process data or information in the foregoing method. In a possible design, the chip system further includes a memory. The memory is configured to store program instructions and data that are necessary for the execution device or the training device. The chip system may include a chip, or may include a chip and another discrete component.

In embodiments of this application, the user is prompted to establish the location association between the auxiliary part and the to-be-recognized object. Because the visually impaired user can sense, through proprioception, a location relationship between the auxiliary part and the to-be-recognized object, and a location relationship between the auxiliary part and the terminal device, spatial alignment between the terminal and the to-be-recognized object in three degrees of freedom can be maintained, and only a location of the terminal in a vertical direction needs to be adjusted. This reduces action costs of the user and increases efficiency of recognition.

In addition, the auxiliary part is used as an anchor point, the auxiliary part is recognized in a computer vision manner, and an area having a spatial relationship with the auxiliary part is defined as an area of interest. The visually impaired user can quickly locate, via a handheld device through a habitual interaction action of recognizing a text in daily life and proprioception of the visually impaired user, an area that needs to be recognized. In addition, this application significantly increases recognition efficiency in a scenario in which there are a plurality of targets and a scenario in which a background is disordered.

### BRIEF DESCRIPTION OF DRAWINGS

FIG. 1 is a diagram of a structure of a terminal device according to an embodiment of this application;
FIG. 2 is a block diagram of a software structure of a terminal device according to an embodiment of this application;
FIG. 3 is a diagram of an embodiment of an image recognition method according to an embodiment of this application;
FIG. 4 is a schematic flowchart of image recognition according to an embodiment of this application;
FIG. 5 is a schematic flowchart of image recognition according to an embodiment of this application;
FIG. 6 is a schematic flowchart of image recognition according to an embodiment of this application;
FIG. 7 is a diagram of a scenario according to an embodiment of this application;
FIG. 8 is a schematic flowchart of image recognition according to an embodiment of this application;
FIG. 9 is a schematic flowchart of image recognition according to an embodiment of this application;
FIG. 10 is a diagram of a scenario according to an embodiment of this application;
FIG. 11 is a diagram of an interface on a terminal according to an embodiment of this application;
FIG. 12 is a diagram of an interface on a terminal according to an embodiment of this application;
FIG. 13 is a diagram of an interface on a terminal according to an embodiment of this application;
FIG. 14 is a diagram of an interface on a terminal according to an embodiment of this application;
FIG. 15 is a schematic flowchart of image recognition according to an embodiment of this application;
FIG. 16 is a schematic flowchart of image recognition according to an embodiment of this application;
FIG. 17 is a schematic flowchart of image recognition according to an embodiment of this application;
FIG. 18 is a diagram of an interface on a terminal according to an embodiment of this application;
FIG. 19 is a schematic flowchart of image recognition according to an embodiment of this application;
FIG. 20 is a diagram of image recognition according to an embodiment of this application;
FIG. 21 is a diagram of an interface on a terminal according to an embodiment of this application;
FIG. 22 is a diagram of an interface on a terminal according to an embodiment of this application;
FIG. 23 is a diagram of an interface on a terminal according to an embodiment of this application;
FIG. 24 is a diagram of an interface on a terminal according to an embodiment of this application;
FIG. 25 is a diagram of an interface on a terminal according to an embodiment of this application;
FIG. 26 is a diagram of an interface on a terminal according to an embodiment of this application;
FIG. 27 is a diagram of a structure of an image recognition apparatus according to an embodiment of this application; and
FIG. 28 is a diagram of a structure of a terminal device according to an embodiment of this application.

### DESCRIPTION OF EMBODIMENTS

The following describes embodiments of the present invention with reference to the accompanying drawings in embodiments of the present invention. Terms used in implementations of the present invention are merely intended to explain specific embodiments of the present invention, and are not intended to limit the present invention.

The following describes embodiments of this application with reference to the accompanying drawings. A person of ordinary skill in the art may learn that, with development of technologies and emergence of a new scenario, the technical solutions provided in embodiments of this application are also applicable to a similar technical problem.

In the specification, claims, and accompanying drawings of this application, the terms such as "first" and "second" are intended to distinguish between similar objects but do not necessarily indicate a specific order or sequence. It should be understood that the terms used in such a way are interchangeable in proper circumstances, which is merely a discrimination manner that is used when objects having a same attribute are described in embodiments of this application. In addition, the terms "include", "have" and any other variants mean to cover the non-exclusive inclusion, so that a process, method, system, product, or device that includes a series of units is not necessarily limited to those units, but may include other units not expressly listed or inherent to such a process, method, product, or device.

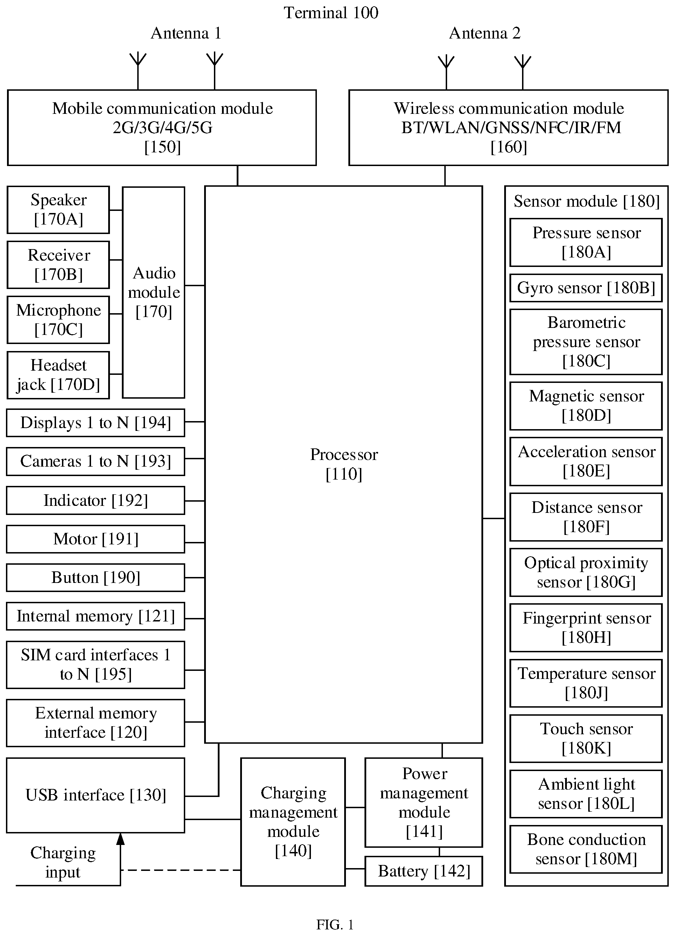

For ease of understanding, a structure of a terminal 100 provided in an embodiment of this application is described below by using an example. FIG. 1 is a diagram of a structure of a terminal device according to an embodiment of this application.

As shown in the FIG. 1, the terminal 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of the present invention does not constitute a specific limitation on the terminal 100. In some other embodiments of this application, the terminal 100 may include more or fewer components than those shown in the figure, or combine some of the components, or split some of the components, or have different layouts of the components. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent components, or may be integrated into one or more processors.

The controller may generate an operation control signal based on an instruction operation code and a time sequence signal, to complete control of instruction reading and instruction execution.

A memory may be further disposed in the processor 110, and is configured to store instructions and data. In some embodiments, the memory in the processor 110 is a cache memory. The memory may store instructions or data that has been used or cyclically used by the processor 110. If the processor 110 needs to use the instructions or the data again, the processor may directly invoke the instructions or the data from the memory. This avoids repeated access, and reduces waiting time of the processor 110, thereby improving system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a bidirectional synchronous serial bus, including a serial data line (serial data line, SDA) and a serial clock line (serial clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the terminal 100.

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call through a Bluetooth headset.

The PCM interface may also be configured to perform audio communication, and sample, quantize, and code an analog signal. In some embodiments, the audio module 170 may be coupled to the wireless communication module 160 through a PCM bus interface. In some embodiments, the audio module 170 may also transmit an audio signal to the wireless communication module 160 through the PCM interface, to implement a function of answering a call through a Bluetooth headset. Both the I2S interface and the PCM interface may be configured to perform audio communication.

The UART interface is a universal serial data bus, and is configured to perform asynchronous communication. The bus may be a two-way communication bus. The bus converts to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of outputting music through a Bluetooth headset.

The MIPI interface may be configured to connect the processor 110 to a peripheral component such as the display 194 or the camera 193. The MIPI interface includes a camera serial interface (camera serial interface, CSI), a display serial interface (display serial interface, DSI), and the like. In some embodiments, the processor 110 communicates with the camera 193 through the CSI interface, to implement a shooting function of the terminal 100. The processor 110 communicates with the display 194 through the DSI interface, to implement a display function of the terminal 100.

The GPIO interface may be configured by using software. The GPIO interface may be configured for a control signal or a data signal. In some embodiments, the GPIO interface may be configured to connect the processor 110 to the camera 193, the display 194, the wireless communication module 160, the audio module 170, the sensor module 180, or the like. The GPIO interface may alternatively be configured as an I2C interface, an I2S interface, a UART interface, an MIPI interface, or the like.

Specifically, a video (including an image frame sequence, for example, including a first image, a second image, and a third image in this application) captured by the camera 193 may be transferred to the processor 110, through, but not limited to, the foregoing described interface (for example, the CSI interface or the GPIO interface) configured to connect the camera 193 to the processor 110.

The processor 110 may obtain instructions from the memory, and perform, based on the obtained instructions, video processing (for example, image recognition in this application) on the video captured by the camera 193, to obtain a processed image (for example, a recognition result).

The processor 110 may transfer the processed image to the display 194 through, but not limited to, the foregoing described interface (for example, the DSI interface or the GPIO interface) configured to connect the display 194 to the processor 110, so that the display 194 may display the video.

The USB interface 130 is an interface that conforms to a USB standard specification, and may be specifically a mini USB interface, a micro USB interface, a USB type-C interface, or the like. The USB interface 130 may be configured to connect a charger to charge the terminal 100, or may be configured to transmit data between the terminal 100 and a peripheral device, or may be configured to connect to a headset to output audio through the headset. Alternatively, the interface may be configured to connect to another electronic device, for example, an AR device.

It may be understood that an interface connection relationship between the modules illustrated in embodiments of the present invention is merely an example for description, and does not constitute a limitation on the structure of the terminal 100. In some other embodiments of this application, the terminal 100 may alternatively use an interface connection manner different from that in the foregoing embodiment, or a combination of a plurality of interface connection manners.

The charging management module 140 is configured to receive a charging input from a charger. The charger may be a wireless charger or a wired charger. In some embodiments of wired charging, the charging management module 140 may receive a charging input from a wired charger through the USB interface 130. In some embodiments of wireless charging, the charging management module 140 may receive a wireless charging input through a wireless charging coil of the terminal 100. The charging management module 140 supplies power to an electronic device through the power management module 141 while charging the battery 142.

The power management module 141 is configured to connect the battery 142 and the charging management module 140 to the processor 110. The power management module 141 receives an input from the battery 142 and/or the charging management module 140, and supplies power to the processor 110, the internal memory 121, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the terminal 100 may be implemented through the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna in the terminal 100 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that includes 2G/3G/4G/5G or the like and that is applied to the terminal 100. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit a processed electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules of the mobile communication module 150 may be disposed in the processor 110. In some embodiments, at least some functional modules of the mobile communication module 150 may be disposed in a same device as at least some modules of the processor 110.

The modem processor may include a modulator and a demodulator. The modulator is configured to modulate a to-be-sent low-frequency baseband signal into a medium-/high-frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal via an audio device (which is not limited to the speaker 170A, the receiver 170B, or the like), or displays an image or a video on the display 194. In some embodiments, the modem processor may be an independent component. In some other embodiments, the modem processor may be independent of the processor 110, and is disposed in a same device as the mobile communication module 150 or another functional module.

The wireless communication module 160 may provide a wireless communication solution that is applied to the terminal 100, and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, and the like. The wireless communication module 160 may be one or more components integrating at least one communication processing module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, in the terminal 100, the antenna 1 is coupled to the mobile communication module 150, and the antenna 2 is coupled to the wireless communication module 160, so that the terminal 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The terminal 100 implements a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs that execute program instructions to generate or change display information. Specifically, the one or more GPUs in the processor 110 may implement an image rendering task (for example, a rendering task related to an image that needs to be displayed in this application, and a rendering result is transferred to an application processor or another display driver, and the application processor or the another display driver triggers the display 194 to display a video).

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the terminal 100 may include one or N displays 194, where N is a positive integer greater than 1. The display 194 may display a target video in embodiments of this application. In an implementation, the terminal 100 may run a shooting-related application. When the terminal starts the shooting-related application, the display 194 may display a shooting screen. The shooting screen may include a viewfinder frame, and a video may be displayed in the viewfinder frame.

The terminal 100 may implement a shooting function through the ISP, the camera 193, the video codec, the GPU, the display 194, the application processor, and the like.

The ISP is configured to process data fed back by the camera 193. For example, during shooting, a shutter is pressed, light is transmitted to a photosensitive element of the camera through a lens, an optical signal is converted into an electrical signal, and the photosensitive element of the camera transmits the electrical signal to the ISP for processing, to convert the electrical signal into a visible image. The ISP may further perform algorithm optimization on noise, luminance, and complexion of the image. The ISP may further optimize parameters such as exposure and a color temperature of a shooting scenario. In some embodiments, the ISP may be disposed in the camera 193.

The camera 193 is configured to capture a static image or a video. An optical image of an object is generated via the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the terminal 100 may include one or N cameras 193, where N is a positive integer greater than 1.

After the DSP converts the digital image signal into the image signal in the standard format such as RGB or YUV, an original image (for example, the first image, the second image, or the third image in embodiments of this application) may be obtained. The processor 110 may further perform image processing on the original image. The image processing includes but is not limited to image stabilization processing, perspective distortion correction processing, optical distortion correction processing, and cropping processing performed to adapt to a size of the display 194. A processed image may be displayed in the viewfinder frame of the shooting screen displayed on the display 194.

In embodiments of this application, there may be at least two cameras 193 in the terminal 100. For example, there are two cameras, where one is a front-facing camera, and the other is a rear-facing camera. For example, there are three cameras, where one is a front-facing camera, and the other two are rear-facing cameras. For example, there are four cameras, where one is a front-facing camera, and the other three are rear-facing cameras. It should be noted that the camera 193 may be one or more of a wide-angle camera, a primary camera, or a telephoto camera.

For example, there are two cameras, where the front-facing camera may be a wide-angle camera, and the rear-facing camera may be a primary camera. In this case, a field of view of an image captured by the rear-facing camera is larger, and there is more image information.

For example, there are three cameras, where the front-facing camera may be a wide-angle camera, and the rear-facing cameras may be a wide-angle camera and a primary camera.

For example, there are four cameras, where the front-facing camera may be a wide-angle camera, and the rear-facing cameras may be a wide-angle camera, a primary camera, and a telephoto camera.

The digital signal processor is configured to process a digital signal, and may process another digital signal in addition to the digital image signal. For example, when the terminal 100 selects a frequency, the digital signal processor is configured to perform Fourier transform, and the like on frequency energy.

The video codec is configured to compress or decompress a digital video. The terminal 100 may support one or more video codecs. In this way, the terminal 100 can output or record videos in a plurality of coding formats, for example, moving picture experts group (moving picture experts group, MPEG)-1, MPEG-2, MPEG-3, and MPEG-4.

The NPU is a neural-network (neural-network, NN) computing processor, quickly processes input information by referring to a structure of a biological neural network, for example, by referring to a mode of transmission between human brain neurons, and may further continuously perform self-learning. Applications such as intelligent cognition of the terminal 100, for example, image recognition, facial recognition, speech recognition, and text understanding, may be implemented through the NPU.

The external memory interface 120 may be configured to connect to an external storage card, for example, a micro SD card, to extend a storage capability of the terminal 100. The external storage card communicates with the processor 110 through the external memory interface 120, to implement a data storage function. For example, files such as music and videos are stored in the external storage card.

The internal memory 121 may be configured to store computer-executable program code. The executable program code includes instructions. The internal memory 121 may include a program storage area and a data storage area. The program storage area may store an operating system, an application required by at least one function (for example, a voice outputting function or an image outputting function), and the like. The data storage area may store data (for example, audio data or an address book) and the like created during use of the terminal 100. In addition, the internal memory 121 may include a high-speed random access memory, or may include a non-volatile memory, for example, at least one magnetic disk storage device, a flash memory, or a universal flash storage (universal flash storage, UFS). The processor 110 runs instructions stored in the internal memory 121 and/or instructions stored in the memory disposed in the processor, to perform various function applications and data processing of the terminal 100.

The terminal 100 may implement an audio function such as music outputting or recording via the audio module 170, the speaker 170A, the receiver 170B, the microphone 170C, the headset jack 170D, the application processor, and the like.

The audio module 170 is configured to convert digital audio information into an analog audio signal for output, and is also configured to convert an analog audio input into a digital audio signal. The audio module 170 may be further configured to encode and decode audio signals. In some embodiments, the audio module 170 may be disposed in the processor 110, or some functional modules of the audio module 170 are disposed in the processor 110.

The speaker 170A, also referred to as a "loudspeaker", is configured to convert an audio electrical signal into a sound signal. The terminal 100 may be used to listen to music or answer a call in a hands-free mode over the speaker 170A.

The receiver 170B, also referred to as an "earpiece", is configured to convert an audio electrical signal into a sound signal. When a call is answered or speech information is received through the terminal 100, the receiver 170B may be put close to a human ear to listen to a voice.

The microphone 170C, also referred to as a "mike" or a "mic", is configured to convert a sound signal into an electrical signal. When making a call or sending speech information, a user may make a sound near the microphone 170C through the mouth of the user, to input a sound signal to the microphone 170C. At least one microphone 170C may be disposed in the terminal 100. In some other embodiments, two microphones 170C may be disposed in the terminal 100, to capture a sound signal and further implement a noise reduction function. In some other embodiments, three, four, or more microphones 170C may alternatively be disposed in the terminal 100, to capture a sound signal, implement noise reduction, recognize a sound source, implement a directional recording function, and the like.

The headset jack 170D is configured to connect to a wired headset. The headset jack 170D may be the USB interface 130, or may be a 3.5 mm open mobile terminal platform (open mobile terminal platform, OMTP) standard interface or cellular telecommunications industry association of the USA (cellular telecommunications industry association of the USA, CTIA) standard interface.

The pressure sensor 180A is configured to sense a pressure signal, and can convert the pressure signal into an electrical signal. In some embodiments, the pressure sensor 180A may be disposed on the display 194. There are a plurality of types of pressure sensors 180A such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The terminal 100 determines pressure intensity based on a capacitance change. When a touch operation is performed on the display 194, the terminal 100 detects intensity of the touch operation via the pressure sensor 180A. The terminal 100 may also calculate a touch location based on a detection signal of the pressure sensor 180A. In some embodiments, touch operations that are performed in a same touch location but have different touch operation intensity may correspond to different operation instructions. For example, when a touch operation whose touch operation intensity is less than a first pressure threshold is performed on an SMS message application icon, an instruction for viewing an SMS message is executed. When a touch operation whose touch operation intensity is greater than or equal to the first pressure threshold is performed on the SMS message application icon, an instruction for creating a new SMS message is executed.

The shooting screen displayed on the display 194 may include a first control and a second control. The first control is used to enable or disable an image stabilization processing function, and the second control is used to enable or disable a perspective distortion correction function. For example, the user may perform an enabling operation of enabling the image stabilization processing function on the display, where the enabling operation may be a tapping operation on the first control. The terminal 100 may determine, based on a detection signal of the pressure sensor 180A, that a tapping location of the display is a location of the first control. In this way, an operation instruction for enabling the image stabilization processing function is generated, and enabling of the image stabilization function is implemented based on the operation instruction for enabling the image stabilization processing function. For example, the user may perform an enabling operation of enabling the perspective distortion correction function on the display, where the enabling operation may be a tapping operation on the second control. The terminal 100 may determine, based on a detection signal of the pressure sensor 180A, that a tapping location of the display is a location of the second control. In this way, an operation instruction for enabling the perspective distortion correction function is generated, and enabling of the perspective distortion correction function is implemented based on the operation instruction for enabling the perspective distortion correction function.

The gyro sensor 180B may be configured to determine a moving posture of the terminal 100. In some embodiments, angular velocities of the terminal 100 around three axes (namely, x, y, and z axes) may be determined through the gyro sensor 180B. The gyro sensor 180B may be configured to implement image stabilization during shooting. For example, when a shutter is pressed, the gyro sensor 180B detects an angle at which the terminal 100 jitters, calculates, based on the angle, a distance for which a lens module needs to compensate, and allows the lens to cancel the jitter of the terminal 100 through reverse motion, to implement image stabilization. The gyro sensor 180B may also be used in a navigation scenario and a somatic game scenario.

The barometric pressure sensor 180C is configured to measure barometric pressure. In some embodiments, the terminal 100 calculates an altitude based on a barometric pressure value measured by the barometric pressure sensor 180C, to assist in positioning and navigation.

The magnetic sensor 180D includes a Hall effect sensor. The terminal 100 may detect opening and closing of a flip cover or a leather case via the magnetic sensor 180D. In some embodiments, when the terminal 100 is a flip phone, the terminal 100 may detect opening and closing of a flip cover through the magnetic sensor 180D. Further, a feature like automatic unlocking of the flip cover is set based on a detected opening or closing state of the leather case or a detected opening or closing state of the flip cover.

The acceleration sensor 180E may detect magnitudes of accelerations of the terminal 100 in various directions (generally three axes). A magnitude and a direction of gravity may be detected when the terminal 100 is still. The acceleration sensor 180E may be further configured to recognize a posture of the electronic device, and is used in an application such as switching between a landscape mode and a portrait mode or a pedometer.

The distance sensor 180F is configured to measure a distance. The terminal 100 may measure the distance in an infrared manner or a laser manner. In some embodiments, in a shooting scenario, the terminal 100 may measure a distance via the distance sensor 180F, to implement quick focusing.

The optical proximity sensor 180G may include, for example, a light emitting diode (LED) and an optical detector, for example, a photodiode. The light emitting diode may be an infrared light emitting diode. The terminal 100 emits infrared light via the light-emitting diode. The terminal 100 detects infrared reflected light from a nearby object via the photodiode. When sufficient reflected light is detected, it can be determined that there is an object near the terminal 100. When insufficient reflected light is detected, the terminal 100 may determine that there is no object near the terminal 100. The terminal 100 may detect, via the optical proximity sensor 180G, that the user holds the terminal 100 close to an ear for a call, to automatically turn off a screen for power saving. The optical proximity sensor 180G may also be used in a leather case mode or a pocket mode to automatically unlock or lock the screen.

The ambient light sensor 180L is configured to sense ambient light brightness. The terminal 100 may adaptively adjust brightness of the display 194 based on the sensed ambient light brightness. The ambient light sensor 180L may also be configured to automatically adjust white balance during shooting. The ambient light sensor 180L may further cooperate with the optical proximity sensor 180G to detect whether the terminal 100 is in a pocket, to avoid an accidental touch.

The fingerprint sensor 180H is configured to collect a fingerprint. The terminal 100 may use a feature of the collected fingerprint to implement fingerprint-based unlocking, application lock access, fingerprint-based shooting, fingerprint-based call answering, and the like.

The temperature sensor 180J is configured to detect a temperature. In some embodiments, the terminal 100 executes a temperature processing policy based on the temperature detected by the temperature sensor 180J. For example, when the temperature reported by the temperature sensor 180J exceeds a threshold, the terminal 100 lowers performance of a processor located near the temperature sensor 180J, to reduce power consumption for thermal protection. In some other embodiments, when the temperature is lower than another threshold, the terminal 100 heats the battery 142 to avoid abnormal shutdown of the terminal 100 due to a low temperature. In some other embodiments, when the temperature is lower than still another threshold, the terminal 100 boosts an output voltage of the battery 142 to avoid abnormal shutdown due to a low temperature.

The touch sensor 180K is also referred to as a "touch device". The touch sensor 180K may be disposed on the display 194, and the touch sensor 180K and the display 194 constitute a touchscreen that is also referred to as a "touch screen". The touch sensor 180K is configured to detect a touch operation performed on or near the touch sensor 180K. The touch sensor may transfer the detected touch operation to the application processor, to determine a type of a touch event. A visual output related to the touch operation may be provided through the display 194. In some other embodiments, the touch sensor 180K may alternatively be disposed on a surface of the terminal 100 at a location different from that of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a body pulse to receive a blood pressure beating signal. In some embodiments, the bone conduction sensor 180M may alternatively be disposed in a headset, to obtain a bone conduction headset. The audio module 170 may obtain a speech signal through parsing based on the vibration signal that is of the vibration bone of the vocal-cord part and that is obtained by the bone conduction sensor 180M, to implement a speech function. The application processor may parse heart rate information based on the blood pressure beating signal obtained by the bone conduction sensor 180M, to implement a heart rate detection function.

The button 190 includes a power button, a volume button, and the like. The button 190 may be a mechanical button, or may be a touch button. The terminal 100 may receive a button input, and generate a button signal input related to a user setting and function control of the terminal 100.

The motor 191 may generate a vibration prompt. The motor 191 may be configured to provide an incoming call vibration prompt and touch vibration feedback. For example, touch operations performed on different applications (for example, shooting and audio output) may correspond to different vibration feedback effects. The motor 191 may also correspond to different vibration feedback effects for touch operations performed on different areas of the display 194. Different application scenarios (for example, a time reminder, information receiving, an alarm clock, and a game) may also correspond to different vibration feedback effects. A touch vibration feedback effect may be further customized.

An output device in embodiments of this application may be a speaker 170A, a headset jack 170D, a motor 191, or the like. The speaker 170A and the headset jack 170D may implement an audio prompt, and the motor 191 may implement a vibration prompt.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or detached from the SIM card interface 195, to implement contact with or separation from the terminal 100. The terminal 100 may support one or N SIM card interfaces, where N is a positive integer greater than 1. The SIM card interface 195 may support a nano-SIM card, a micro-SIM card, a SIM card, and the like. A plurality of cards may be inserted into a same SIM card interface 195 at the same time. The plurality of cards may be of a same type or different types. The SIM card interface 195 is compatible with different types of SIM cards. The SIM card interface 195 is also compatible with an external storage card. The terminal 100 interacts with a network through the SIM card, to implement functions such as calling and data communication. In some embodiments, the terminal 100 uses an eSIM, namely, an embedded SIM card. The eSIM card may be embedded in the terminal 100, and cannot be separated from the terminal 100.

A software system of the terminal 100 may use a layered architecture, an event-driven architecture, a microkernel architecture, a microservice architecture, or a cloud architecture. In embodiments of the present invention, an Android system with a layered architecture is used as an example to illustrate a software structure of the terminal 100.

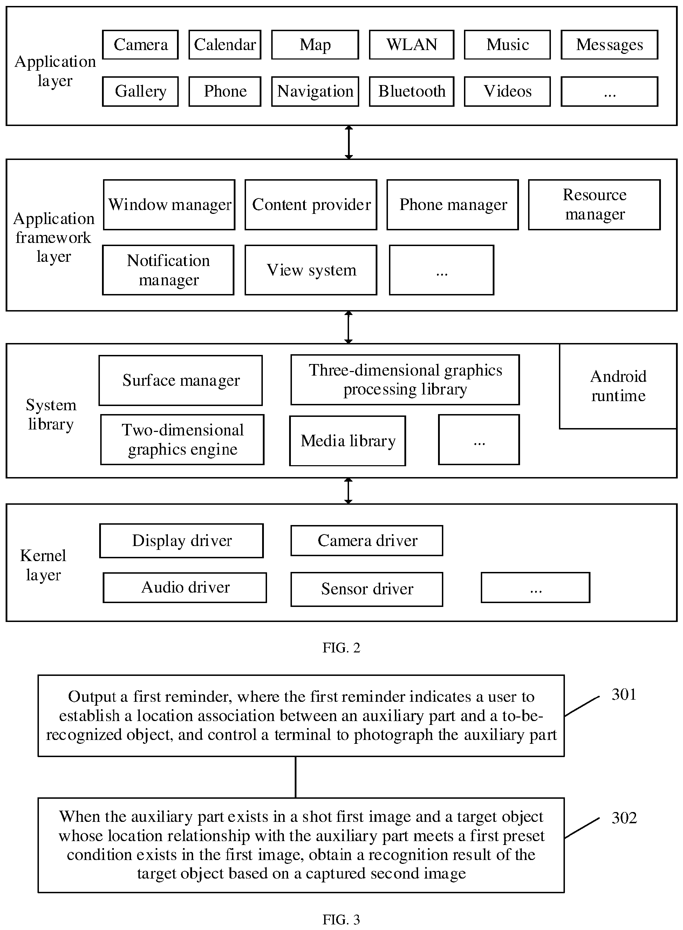

FIG. 2 is a block diagram of a software structure of the terminal 100 according to an embodiment of the present disclosure.

In a layered architecture, software is divided into several layers, and each layer has a clear role and task. The layers communicate with each other through a software interface. In some embodiments, the Android system is divided into four layers: an application layer, an application framework layer, an Android runtime (Android runtime) and system library, and a kernel layer from top to bottom.

The application layer may include a series of application packages.

As shown in FIG. 2, the application packages may include applications such as Camera, Gallery, Calendar, Phone, Map, Navigation, WLAN, Bluetooth, Music, Videos, and Messages.

The application framework layer provides an application programming interface (application programming interface, API) and a programming framework for an application at the application layer. The application framework layer includes some predefined functions.

As shown in FIG. 2, the application framework layer may include a window manager, a content provider, a view system, a phone manager, a resource manager, a notification manager, and the like.

The window manager is used to manage a window program. The window manager may obtain a size of a display, determine whether there is a status bar, perform screen locking, take a screenshot, and the like.

The content provider is used to: store and obtain data, and enable the data to be accessed by an application. The data may include a video, an image, audio, calls that are made and answered, a browsing history, a browsing bookmark, an address book, and the like.

The view system includes visual controls such as a control for displaying a text and a control for displaying an image. The view system may be used to construct an application. A display interface may include one or more views. For example, a display interface including an SMS message notification icon may include a text display view and an image display view.

The phone manager is used to provide a communication function for the terminal 100, for example, management of a call status (including answering, declining, or the like).

The resource manager provides, for an application, various resources such as a localized character string, an icon, an image, a layout file, and a video file.

The notification manager enables an application to display notification information in a status bar, and may be used to convey a notification-type message. The message may automatically disappear after a short pause without user interaction. For example, the notification manager is used to notify download completion, give a message notification, and the like. The notification manager may alternatively be a notification that appears in a top status bar of the system in a form of a graph or a scroll bar text, for example, a notification of an application that is run in a background, or may be a notification that appears on a screen in a form of a dialog window. For example, text information is displayed in the status bar, an alert tone is made, the electronic device vibrates, or the indicator light blinks.

The Android runtime includes a core library and a virtual machine. The Android runtime is responsible for scheduling and management of the Android system.

The core library includes two parts: a function that needs to be invoked in java language, and a core library of Android.

The application layer and the application framework layer run on the virtual machine. The virtual machine executes Java files at the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (Media Library), a three-dimensional graphics processing library (for example, OpenGL ES), and a two-dimensional graphics engine (for example, SGL).

The surface manager is used to manage a display subsystem and provide fusion of a 2D layer and a 3D layer for a plurality of applications.

The media library supports playback and recording in a plurality of commonly used audio and video formats, static image files, and the like. The media library may support a plurality of audio and video coding formats, for example, MPEG-4, H.264, MP3, AAC, AMR, JPG, and PNG.

The three-dimensional graphics processing library is used to implement three-dimensional graphics drawing, image rendering, composition, layer processing, and the like.

The two-dimensional graphics engine is a drawing engine for 2D drawing.

The kernel layer is a layer between hardware and software. The kernel layer includes at least a display driver, a camera driver, an audio driver, and a sensor driver.

An example of a working procedure of software and hardware of the terminal 100 is described below with reference to a shooting scenario.

When the touch sensor 180K receives a touch operation, a corresponding hardware interrupt is sent to the kernel layer. The kernel layer processes the touch operation into an original input event (including information such as touch coordinates and a time stamp of the touch operation). The original input event is stored at the kernel layer. The application framework layer obtains the original input event from the kernel layer, and identifies a control corresponding to the input event. For example, the touch operation is a touch tap operation, and a control corresponding to the tap operation is a control of an icon of a camera application. The camera application invokes an interface of the application framework layer to start the camera application, and then invokes the kernel layer to start the camera driver, to capture a static image or a video via the camera 193. The captured video may include the first image, the second image, the third image, and the like in embodiments of this application.

In daily life, a visually impaired person has the need to recognize a lot of text information in a near-field environment, for example, recipient information on a shipping label, and a name, usage, and a dosage on a package insert. Currently, the visually impaired person can obtain near-field text information via a terminal device by using an optical character recognition (optical character recognition, OCR) technology and a text to speech (text to speech, TTS) technology. However, when using information recognition software that is provided with the OCR technology and the TTS technology, the visually impaired person still cannot take a photo, cannot take a photo completely, or cannot take a photo clearly due to lack of visual feedback information.

Therefore, in conventional technologies, it begins to explore how to help the visually impaired person accurately and completely read text information in a to-be-recognized area via an image capture device. In an existing implementation, an integrity of a file in a current picture is monitored in real time, to calculate a direction and a distance in and by which a user needs to move a mobile phone, and guide the user via voice.

However, the user needs to move at four degrees of freedom (three degrees of freedom of displacement and one degree of freedom of turn), for example, "move forward by 1 foot" and "move left by 1 foot", and "turn toward a direction of five o'clock". During moving, the user is prone to deviation from a target, and an error rate is high. A blind user cannot accurately quantify a moving distance and a turning angle of the user, and cannot make a precise action in a guide, sometimes increasing a degree of deviation from the target.

To resolve the foregoing technical problem, embodiments of this application provide an image recognition method.

For ease of understanding, the image recognition method provided in embodiments of this application is described in detail with reference to the accompanying drawings and application scenarios.

FIG. 3 is a diagram of an embodiment of the image recognition method according to an embodiment of this application. As shown in FIG. 3, the image recognition method provided in this application includes the following steps.

301: Output a first reminder, where the first reminder indicates a user to establish a location association between an auxiliary part and a to-be-recognized object, and control a terminal to photograph the auxiliary part.

Step 301 may be performed by a terminal device.

The user (for example, a blind user) may start an application that has an image recognition capability on the terminal, and the user may send an information recognition (for example, image recognition) request through an interaction event (for example, voice, touch, or button), to trigger a recognition procedure.

In a possible implementation, the terminal may start a camera of the terminal. Correspondingly, the terminal may display a shooting picture of the camera, and the user may align a shooting area of the camera with the to-be-recognized object. In this way, the terminal can recognize content in the shooting picture (or send the content in the shooting picture to another computing device, for example, a server, for recognition).

It can be learned from the foregoing descriptions that, for the user, especially a blind person, it is quite difficult to align the camera with the to-be-recognized object. "It is quite difficult to align" is mainly reflected in that a parallel relationship between the terminal device and the to-be-recognized object cannot be ensured, and it cannot be ensured that the to-be-recognized object completely falls within an effective capture range of the camera. However, the blind person has a capability of guiding a hand direction through proprioception and quickly correcting the hand direction during moving. A visually impaired person more tends to locate an object with his hand (or an auxiliary tool operated by the hand), and locates, with one hand, an object that needs to be recognized, and the other hand may also sense a distance and an orientation relationship between the two hands, to quickly adjust an appropriate recognition distance. The visually impaired person may photograph the hand through proprioception, and may make a mobile phone roughly parallel to a to-be-photographed object.

In other words, the visually impaired person may find the hand (or another auxiliary tool other than the hand) with the terminal, and makes the terminal roughly parallel to the hand. In this way, it is equivalent to that the terminal finds the object. The terminal device may prompt the user to place the hand (or the another auxiliary tool other than the hand) on a to-be-recognized area that may be a plane or an object, and prompt the user to photograph the hand (or the another auxiliary tool other than the hand) of the user with the device. After the prompt, the device determines whether the hand (or the another auxiliary tool other than the hand) has been recognized. If the hand (or the another auxiliary tool other than the hand) has been recognized, an area having a spatial relationship with the hand (or the another auxiliary tool other than the hand) is defined as an area of interest, namely, the to-be-recognized area. If the terminal device indicates that the hand is not recognized, the device continues to prompt the user to photograph the hand of the user.

In this embodiment of this application, an example in which the auxiliary tool is a hand is used for description.

In a possible implementation, the terminal device may output the first reminder. The first reminder indicates the user to establish the location association between the auxiliary part and the to-be-recognized object, and control the terminal to photograph the auxiliary part.

In a possible implementation, the auxiliary part is a hand. The first reminder indicates the user to establish a location association between the hand and the to-be-recognized object.

In a possible implementation, the to-be-recognized object is a planar object, and the first reminder specifically indicates the user to cover the to-be-recognized object with the hand. For example, the to-be-recognized object may be a text on a screen, on paper, or on another plane.

In a possible implementation, the to-be-recognized object is a stereoscopic object, and the first reminder specifically indicates the user to pick up the to-be-recognized object with the auxiliary part or cover one surface of the stereoscopic object with the hand. The stereoscopic object may be a column or a polyhedron. For some non-planar objects, information is distributed on an entire cylindrical surface or a plurality of surfaces of a polyhedron. Before the first reminder is output, whether a to-be-recognized object needs to be picked up may be determined based on a size feature of the object. The size feature is mainly implemented by comparing a size of the auxiliary part with that of the object. For example, the first reminder may be playing "please pick up the object and make your palm face yourself". For an object that cannot be picked up, such as a large-capacity beverage, the user is reminded to place the auxiliary part on a target surface. Generally, the target surface is a column body of a cylinder, or any surface of a polyhedron.

It should be understood that, when the to-be-recognized object is a stereoscopic object, after the first reminder is output, the terminal device may detect whether there is target information in a shot image (belonging to a shot video). The target information may be a text, an image, or the like. Optionally, the target information may be specified by the user in advance (for example, may be entered by the user on the terminal in advance). The terminal device may prompt the user to turn an object (the cylinder) or flip a surface (the polyhedron).

In a possible implementation, for the cylinder, the prompt is stopped when the target information is recognized, or the prompt is stopped when turning for one circle is recognized, or for the polyhedron, the prompt is stopped when the target information is recognized or when traversing of all the surfaces is recognized.

In a possible implementation, the auxiliary part is an auxiliary tool operated by a hand of the user, for example, may be a component including a plate structure. The user may cover the to-be-recognized object with the auxiliary tool.

In embodiments of this application, the user is prompted to establish the location association between the auxiliary part and the to-be-recognized object. Because the visually impaired user can sense, through proprioception, a location relationship between the auxiliary part and the to-be-recognized object, and a location relationship between the auxiliary part and the terminal device, spatial alignment between the terminal and the to-be-recognized object in three degrees of freedom can be maintained, and only a location of the terminal in a vertical direction needs to be adjusted. This reduces action costs of the user and increases efficiency of recognition.

In addition, the auxiliary part is used as an anchor point, the auxiliary part is recognized in a computer vision manner, and an area having a spatial relationship with the auxiliary part is defined as an area of interest. The visually impaired user can quickly locate, via a handheld device through a habitual interaction action of recognizing a text in daily life and proprioception of the visually impaired user, an area that needs to be recognized. In addition, this application significantly increases recognition efficiency in a scenario in which there are a plurality of targets and a scenario in which a background is disordered.

302: When the auxiliary part exists in a shot first image and a target object whose location relationship with the auxiliary part meets a first preset condition exists in the first image, obtain a recognition result of the target object based on a captured second image.

The first image and the second image are images in a video stream that is shot by the user controlling the terminal after the first reminder is output, and capture time of the second image is later than that of the first image.

In a possible implementation, the terminal may capture the video stream, and perform image analysis on the video stream. When determining that an image that meets an image recognition condition is captured (for example, the image that meets the image recognition condition may be the first image), the terminal may perform image recognition.

In a possible implementation, the first preset condition includes at least one of the following: The target object overlaps the auxiliary part; the target object is in a direction indicated by the auxiliary part; and the target object is an object that is closest to the auxiliary part in a plurality of objects included in the first image.

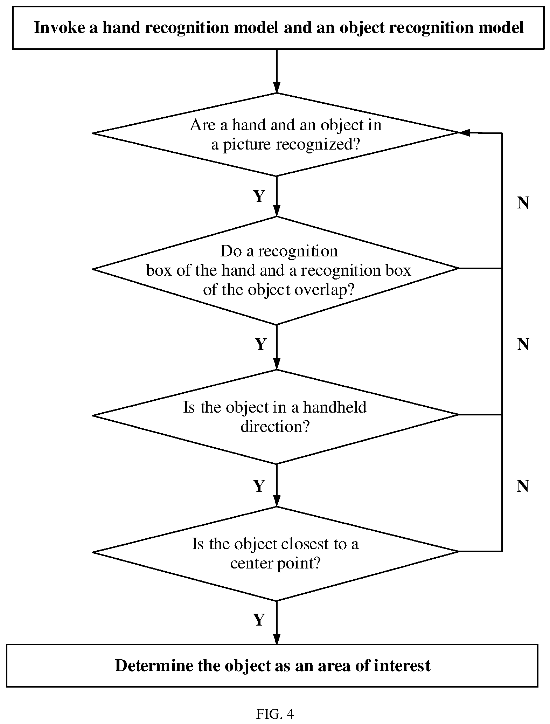

Optionally, as shown in FIG. 4, a hand recognition model and an object recognition model may be invoked to determine whether a hand and an object are recognized in a picture. If the hand and the object have been recognized, it is determined whether a recognition box of the hand and a recognition box of the object overlap and the overlapping exceeds a threshold. If the recognition box of the hand and the recognition box of the object overlap and the overlapping exceeds the threshold, it is determined whether the object is in a handheld direction. If the object is in the handheld direction, it is determined whether the object is closest to a center point and a distance exceeds a threshold. If the object is closest to the center point and the distance exceeds the threshold, the object/area is determined as an area of interest. If any condition is not met, the determining picture is returned to continue to recognize the hand and the object until the area of interest is found via the mobile shooting device.

In a possible implementation, the video stream further includes a third image whose capture time is earlier than that of the first image; and a second reminder may be further output when the target object that meets the first preset condition does not exist in the third image, where the second reminder indicates the user to cancel the location association between the auxiliary part and the to-be-recognized object or move the auxiliary part toward an edge of the to-be-recognized object; and the capture time of the second image is later than outputting the second reminder.

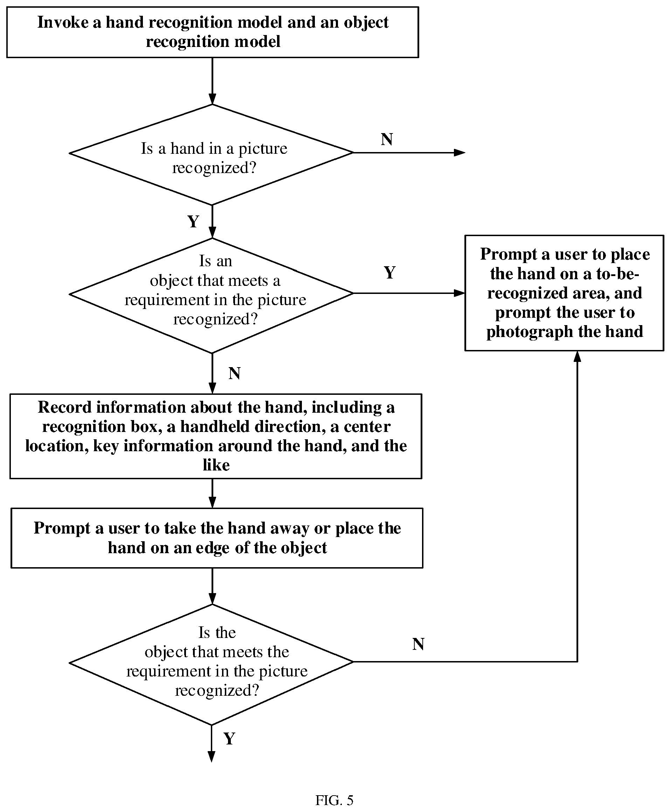

In a possible implementation, as shown in FIG. 5, in some scenarios, due to blocking of a hand, an object that meets a requirement cannot be found after the hand is recognized. If the user fails to recognize, for a plurality of times, the object that meets the requirement, information about the hand is recorded, including a location of a recognition box, a handheld direction, a hand center location, and the like, or feature information around the hand may be recorded to assist in positioning of entire photographed content, for example, information about another object. Then, the user is prompted to take the hand away or place the hand on the edge of the object, and whether there is the object that meets the requirement is computed based on stored information and a current picture. In other words, as shown in FIG. 5, whether there is the object and the hand is determined. If the object and the hand have been recognized, it is determined whether a recognition box of the hand and a recognition box of the object overlap and the overlapping exceeds a threshold. If the recognition box of the hand and the recognition box of the object overlap and the overlapping exceeds the threshold, it is determined whether the object is in a handheld direction. If the object is in the handheld direction, it is determined whether the object is closest to a center point and a distance exceeds a threshold. If the object is closest to the center point and the distance exceeds the threshold, the object/area is determined as an area of interest.

Before the image that meets the image recognition requirement can be obtained, the user may be reminded, based on an image captured by the camera, to correct a posture of the terminal (for example, the second reminder, a third reminder, and a fourth reminder described in subsequent embodiments), so that a clear image including the complete to-be-recognized object can be shot.

In a possible implementation, a third reminder may be further output when a picture of the target object in the first image is incomplete or unclear, where the third reminder indicates the user to control the terminal to move away from or close to the to-be-recognized object; and the capture time of the second image is later than outputting the third reminder.

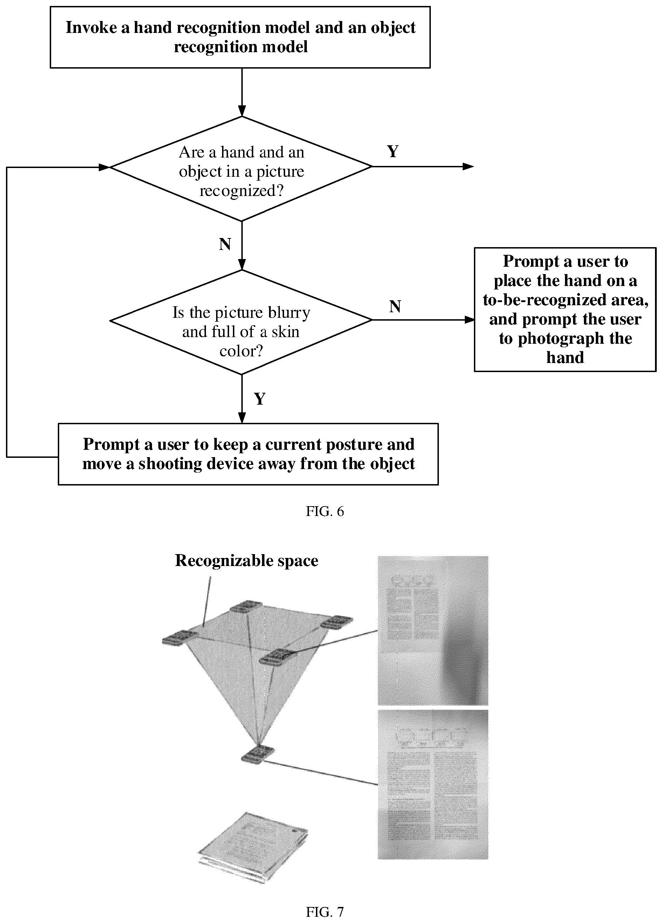

In a possible implementation, if the hand and the object cannot be photographed in the picture, a shooting distance may be excessively short. In this case, the shooting device cannot focus, and consequently the picture is continuously blurry. As shown in FIG. 6, whether the picture is continuously blurry may be determined (in a conventional technology, determining is mainly performed based on some picture features such as contrast and sharpness). If the picture is blurry, it is determined that the shooting distance is excessively short, and the user is prompted to move the shooting device away.

FIG. 7 is a diagram in which the terminal takes a photo of an object completely. There is a recognizable space. For example, the to-be-recognized object is a document. As shown in FIG. 7, the recognizable space of the terminal that takes a photo of the document completely is within a cone range. Shooting effect at the bottom that is a closest location is shown in the lower right figure in FIG. 7, and the document is just photographed completely and occupies the entire picture. Shooting effect at the upper right front location in FIG. 7 is shown in the upper right figure in FIG. 7, and the document may be photographed completely and is located in the upper left corner of the picture.

It can be learned from the foregoing embodiment that the visually impaired person may find a hand via the shooting device, and make the shooting device approximately parallel to the hand. However, after an object of interest and an area of interest are determined, the area is not necessarily complete. Therefore, deviation correction needs to be guided to adjust a location of the mobile phone. In this embodiment, if the object is already in the picture, and the shooting device is parallel to the hand and the object, after the user finds the hand and the to-be-recognized object, the user needs only to be guided to maintain a posture of the mobile phone and move the mobile phone in a normal direction (vertical to a surface of a touchscreen of the mobile phone) of the mobile phone.

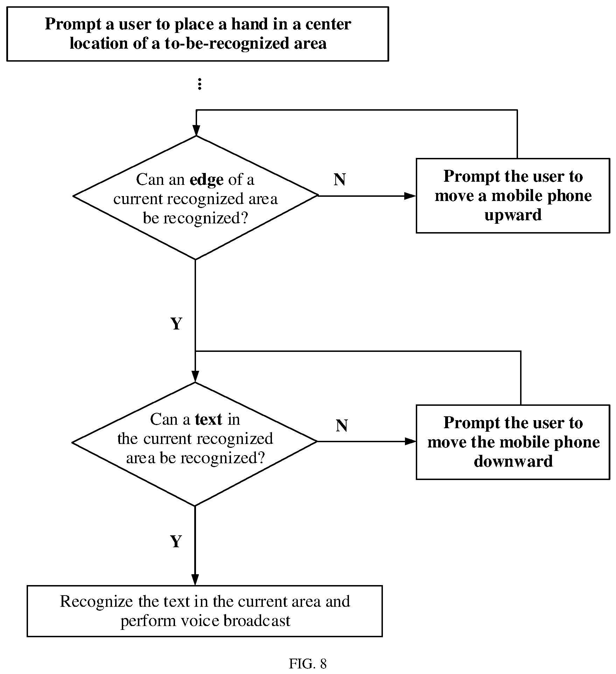

In a possible implementation, as shown in FIG. 8, whether an edge of a current recognized area can be recognized. If the edge of the current recognized area can be recognized, whether information about the current recognized area can be recognized continues to be determined. If the information about the current recognized area can be recognized, a text in the area is recognized and voice broadcast is performed; or if the information about the current recognized area cannot be recognized, it indicates that a to-be-recognized object in an image is incomplete, and the user may be prompted to move the shooting device upward ("away from the object"), and whether the user has taken a photo of an object/area completely is determined. The user may be prompted to move the shooting device upward or downward via voice "please keep the mobile phone in a posture and slowly move upward or downward", or iconic sound effect or vibration may be used to indicate moving away from or close to an object, and continuous feedback is provided. After a target location is reached, reaching is prompted via voice, sound effect, vibration, or the like.

Alternatively, feedback may be provided to the user based on a distance between a target point and a current location. A location of a target point of the shooting device needs to be estimated, and is compared with a current location of the shooting device. In a process of prompting the user to move downward/upward, feedback is provided based on the distance between the target point and the current location. The feedback form includes a discretely changing or continuously changing feedback form. For example, a short beep sound is played, and a playing frequency is changed based on a distance; or a continuously changing sound prompt is played, a pitch of a sound is changed based on a distance, and a vibration intensity is changed based on a distance. The location of the target point of the shooting device may be estimated by recognizing an object and based on an actual picture location of the object.

In a possible implementation, a fourth reminder may be further output based on a pose difference if a difference between a posture of the terminal when the terminal moves away from or close to the to-be-recognized object and a posture of the terminal before the terminal moves away from or close to the to-be-recognized object is greater than a threshold, where the fourth reminder indicates the user to control the terminal to perform posture adjustment, and an adjustment amount of the posture adjustment is related to the pose difference.

When an object is photographed, there is a spatial range formed by relative locations and angles of a camera and a file that needs to be photographed. In this spatial range, information on a photo taken by the camera may be well recognized. As described above, when the user is guided to move the shooting device to take a photo of the object completely, each person has an operation habit or the shooting device is not stable during moving, a terminal posture is different from an initial terminal posture, and the shooting device cannot reach a target location by moving up and down. Therefore, it is necessary to guide the user to restore the terminal posture.

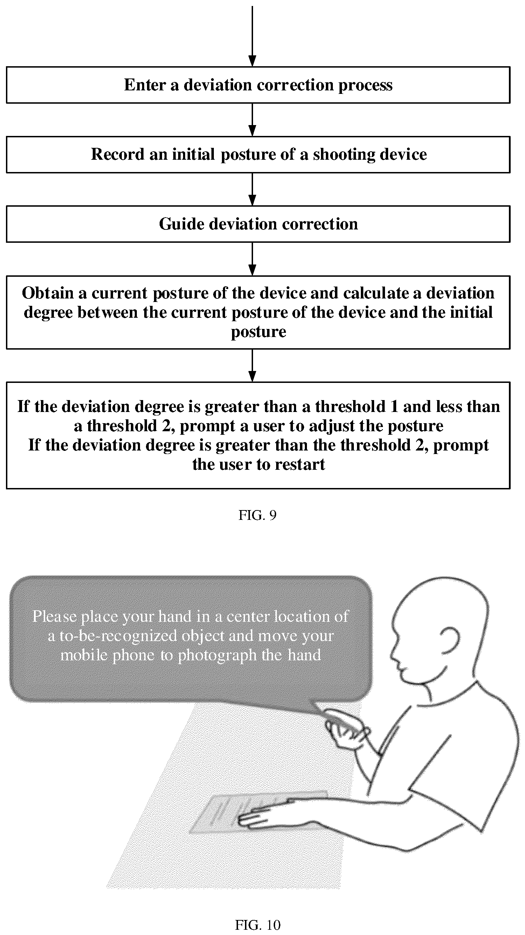

In a possible implementation, as shown in FIG. 9, after a deviation correction prompt starts, a posture of the shooting device is first recorded as an initial posture, and then the deviation correction prompt starts. In a deviation correction process, a current posture of the device is obtained and a current deviation degree is calculated. The deviation degree is a difference between the initial posture of the shooting device and the current posture of the terminal when the deviation correction process is performed. The posture of the shooting device may be represented via a motion sensor in the shooting device, or may be calculated based on a location of a fixed object in a shooting picture, or the two methods are combined.

The motion sensor is used as an example. After an initial posture (for example, a quaternion) of the motion sensor is recorded, a value obtained by subtracting initial posture data from posture data in a subsequent movement adjustment process is recorded as the deviation degree. Calculation based on the location of the fixed object is used as an example. An initial posture is calculated based on a posture (for example, a normal vector) of the hand in a current picture, a value obtained by subtracting initial posture data from posture data in a subsequent movement adjustment process is recorded as the deviation degree.

Then, it is determined whether the deviation degree exceeds a threshold 1. If the deviation degree exceeds a requirement of the threshold 1 but does not exceed a threshold 2, a voice is used to prompt the user to stabilize and adjust a shooting status. If the deviation degree exceeds the threshold 2, the user is prompted to restart. A coverage range of the threshold 1 is as follows: At the angle, whether a shooting picture has a deviation but a deviation degree is not large and does not affect effect of recognizing the object information. If the threshold 2 is exceeded, at the angle or after deviation correction is performed at the angle, information in the picture on the terminal cannot be correctly recognized.

In the deviation correction process, if it is detected that a posture change of the terminal exceeds a specific angle, the user is prompted to perform correction again. In the adjustment process, when the user performs an incorrect action, the user is prompted in time, to reduce a probability of an error of the user, and can stop loss in time when the error is large, and start again, to avoid endless deviation correction.

In a possible implementation, a fifth reminder may be further output when the auxiliary part exists in the shot first image and the target object whose location relationship with the auxiliary part meets the first preset condition exists in the first image, where the fifth reminder indicates the user to cancel the location association between the auxiliary part and the to-be-recognized object; and the capture time of the second image is later than outputting the fifth reminder. In other words, after the first image that meets the image recognition requirement is captured, the user may be reminded to remove the auxiliary tool from the to-be-recognized object, so that the camera can capture a complete to-be-recognized object (the second image).

This application provides the image recognition method. The method includes: outputting the first reminder, where the first reminder indicates the user to establish the location association between the auxiliary part and the to-be-recognized object, and control the terminal to photograph the auxiliary part; and when the auxiliary part exists in the shot first image and the target object whose location relationship with the auxiliary part meets the first preset condition exists in the first image, obtaining the recognition result of the target object based on the captured second image, where the first image and the second image are the images in the video stream that is shot by the user controlling the terminal after the first reminder is output, and the capture time of the second image is later than that of the first image.

According to this application, the user is prompted to establish the location association between the auxiliary part and the to-be-recognized object. Because the visually impaired user can sense, through proprioception, a location relationship between the auxiliary part and the to-be-recognized object, and a location relationship between the auxiliary part and the terminal device, spatial alignment between the terminal and the to-be-recognized object in three degrees of freedom can be maintained, and only a location of the terminal in a vertical direction needs to be adjusted. This reduces action costs of the user and increases efficiency of recognition.

The following describes the image recognition method in this application with reference to a specific example by using an example in which a hand serves as an auxiliary part and a to-be-recognized object is a document.

In a possible implementation, an input of the user may be obtained, to start a recognition procedure. Specifically, an information recognition request may be sent through an interaction event (for example, voice, touch, or button), to trigger the recognition procedure. An object or information area of interest is obtained by recognizing a spatial relationship between a hand and an object. Specifically, the terminal device may prompt the user to place the hand on a to-be-recognized area that may be a plane or an object, and prompt the user to photograph the hand of the user with the device, as shown in FIG. 10.

After the prompt, the device determines whether the hand and the document have been recognized. If the hand and the document have been recognized, the object, namely, the document that has a spatial relationship with the hand is defined as an area of interest, namely, the to-be-recognized area. If the device indicates that the hand and the document are not recognized, the device continues to prompt the user to photograph the hand of the user.

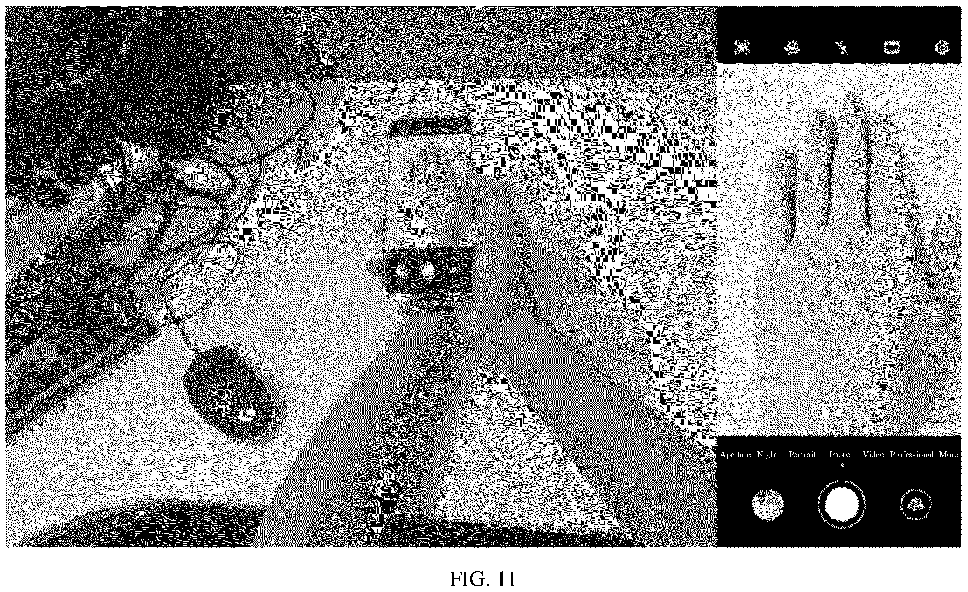

As shown in FIG. 11, after recognizing that the user has photographed the hand, and recognizing that the target object is a document below and is an area of interest, a system informs the user that sound effect such as "ding" has been recognized, and reminds the user to move the hand away via voice such as "please move the hand away". In the previous step of recognizing the area of interest, if the document is seriously blocked by the hand, the document having a spatial relationship with the hand cannot be recognized. In this case, the spatial relationship of the hand is recorded, and a prompt indicates to move the hand away. After the hand is moved away, the document is recognized, and the document having the spatial relationship with the hand is used as the area of interest, and the subsequent operations described above are performed.

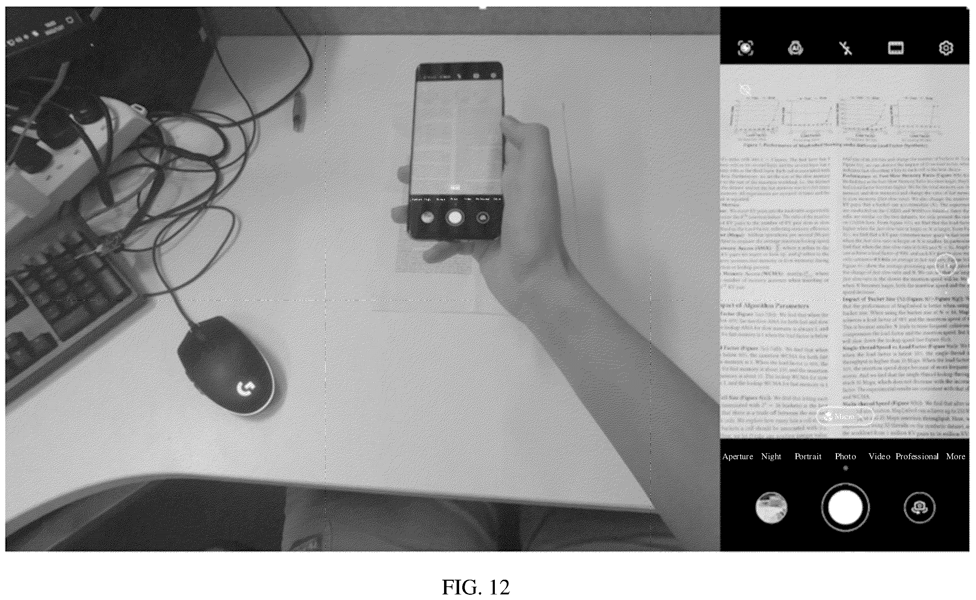

As shown in FIG. 12, after recognizing that the user moves the hand away, the system informs the user that the sound effect such as "ding" has been recognized, and reminds the user to maintain a posture of the mobile phone and move the mobile phone upward when recognizing that an edge of the document cannot be obtained, and. In a process of moving the mobile phone upward, the system prompts the user to continue moving the mobile phone upward via continuous sound effect such as "ding... ding... ding."

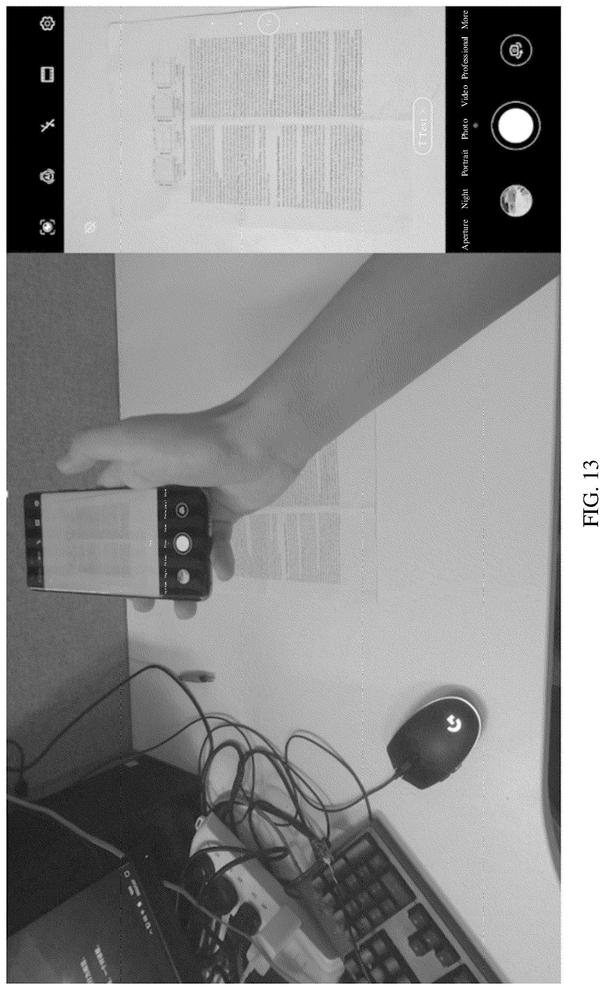

As shown in FIG. 13, when recognizing the edge of the object, the system informs the user that the sound effect such as "ding" has been recognized, for example, vibration. Then, the system prompts the user to stabilize both hands, to automatically focus, and take a photo. Then, document information recognition, for example, OCR, is performed, and information content is broadcast via voice.

The following describes the image recognition method in this application with reference to a specific example by using an example in which a hand serves as an auxiliary part and a to-be-recognized object is a stereoscopic object (a medicine bottle).

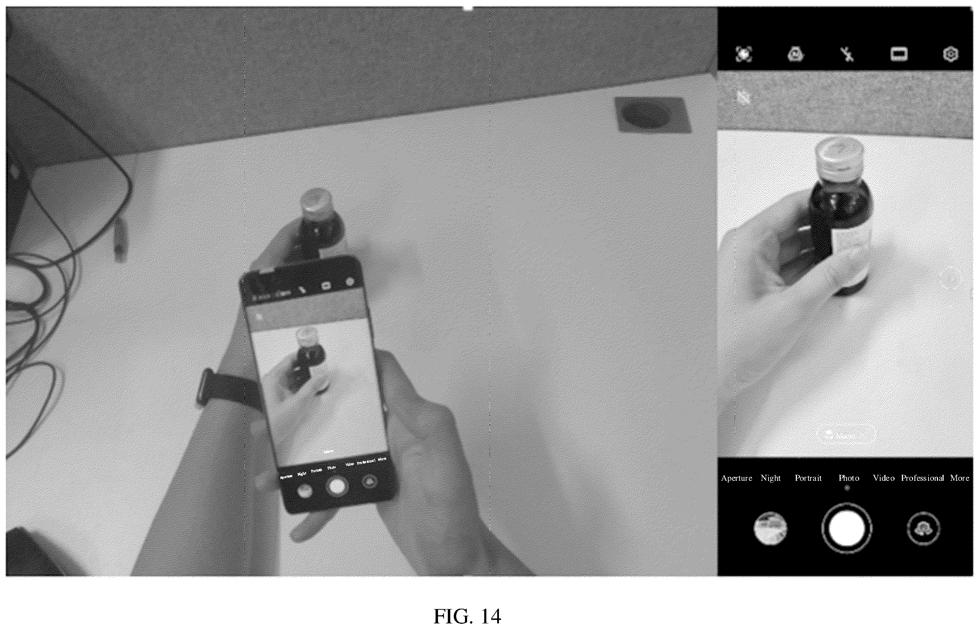

Sometimes, information on different objects needs to be read, different objects may be classified into three types: planar objects (such as files), cylindrical objects (such as beverages), and polyhedral objects (such as medicine boxes). Different object types need different guidance policies, to obtain required information. For some cylindrical objects, polyhedral objects, or other objects with irregular shapes, both a size and a shape of the object may affect a recognition interaction procedure. Whether the object needs to be picked up and placed in hands and whether the object needs to be turned or switched will affect the entire interaction process. A user sends an information recognition request through an interaction event (such as voice, touch, or button) to trigger a recognition procedure. A device prompts the user to place a hand on a to-be-recognized area that may be a plane or an object, and prompts the user to photograph the hand with the device, as shown in FIG. 14.

After the prompt, the device determines whether the hand and the object, for example, a medicine bottle in the figure have been recognized. If the hand and the medicine bottle have been recognized and a spatial relationship exists between the medicine bottle and the hand, the object (the medicine bottle) is defined as an area of interest, namely, the to-be-recognized area. If the device indicates that the hand and the medicine bottle are not recognized, the device continues to prompt the user to photograph the hand of the user.

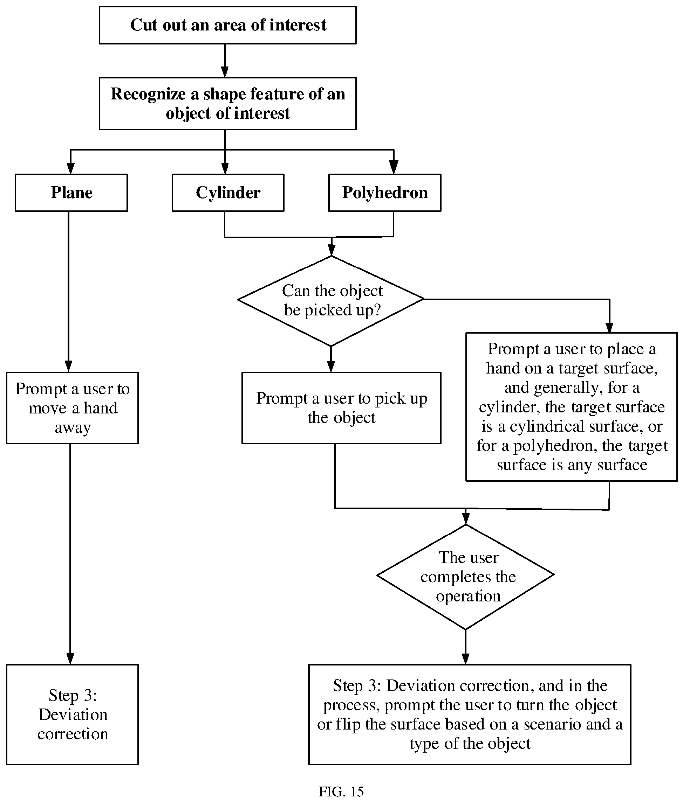

As shown in FIG. 15, after the area of interest is recognized, shape features of the object are recognized, and may be classified into three types: a plane, a column, and a polyhedron.

For some non-planar objects, information is distributed on an entire cylindrical surface or a plurality of surfaces of a polyhedron. Therefore, whether an object needs to be picked up needs to be determined based on a size feature of an object. The size feature is mainly implemented by comparing a size of the hand with that of the object. As shown in FIG. 14, if an object is a medicine bottle that can be picked up, the user is reminded that "please pick up the object and make your palm face yourself". For an object that cannot be picked up, such as a large-capacity drink, the user is reminded to place the hand on a target surface. Generally, the target surface is a column body of a cylinder, or any surface of a polyhedron.

After it is recognized that the user completes the operation, the user first takes a photo of the object completely according to the foregoing steps, and then the user is prompted to turn the object (the cylinder) or flip a surface (the polyhedron) depending on whether a current display picture has target information.

For a cylinder, the prompt is stopped when the target information is recognized, or the prompt is stopped when turning for one circle is recognized; or for a polyhedron, the prompt is stopped when the target information is recognized or when traversing of all surfaces is recognized. The target information may be information such as a preset shelf life and a preset ingredient. To recognize that the cylinder is turned for one circle or the surfaces of the polyhedron are traversed, spatial information of each surface and user operations need to be recorded, and the obtained information and operations may be used to guide the user to perform flipping.

After the information is recognized, the information content may be broadcast via voice.

In some scenarios, near-field information further includes a series of touchscreens such as self-service terminals, for example, a hospital registration device, a bank self-service withdrawal device, and a parcel locker. These devices generally have no barrier-free function currently, for example, narration or screen reading. In these scenarios, in addition to the foregoing information obtaining, the user further needs to be guided to tap a target button to complete an operation. For example, for the parcel locker, the user needs to be guided to tap to select pickup, and after a QR code interface is popped out, a grid is opened by scanning a QR code.

In a possible implementation, the target object is a screen, and the terminal includes a touch component; the recognition result is text content corresponding to a target control on the screen; and the text content may be further output, and a selection of the user for the target control is received; and a sixth reminder is output based on a relative location between the touch component and the target control, where the sixth reminder indicates the user to control the terminal to perform location adjustment until the touch component is in contact with the target control, and an adjustment amount of the location adjustment is related to the relative location.

In a possible implementation, the relative location may be determined based on a location relationship between an image area of the target control in the image and an image area corresponding to the touch component. When the camera captures the video stream, the user may be guided to keep the terminal device continuously approaching the target control. In addition, a guiding process is to guide whether an area in which the target control is located in the image and an area corresponding to the touch component keep matching (for example, keep overlapping), so that the touch component can be successfully in contact with the target control. The area corresponding to the touch component may be an image area in a display picture of the video stream, and the area is related to a fixed location of the touch component on the terminal device.

In a possible implementation, the touch component is a support attached to a back of the terminal or a corner of the terminal.

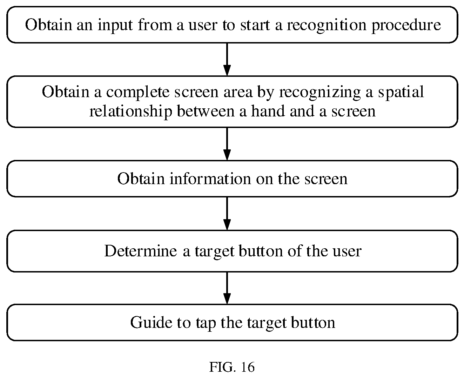

FIG. 16 shows an example of an interaction procedure of this embodiment.

Information on a screen is recognized, and a target button that a user currently wants to tap is determined. The button can be locked in either of the following manners.

A system presets a target button in a current scenario and automatically performs recognition and confirmation. For example, if the current scenario is a parcel locker scenario, the system presets that the target button in the current scenario is "a button having a pickup function/a button that can jump to a page of pickup". When a touchscreen of a parcel locker is recognized, the target button on the screen is automatically recognized and locked as a target button. A manner of recognizing a button is generally performing recognition based on a text or an icon of an interface in an OCR or image template matching manner.

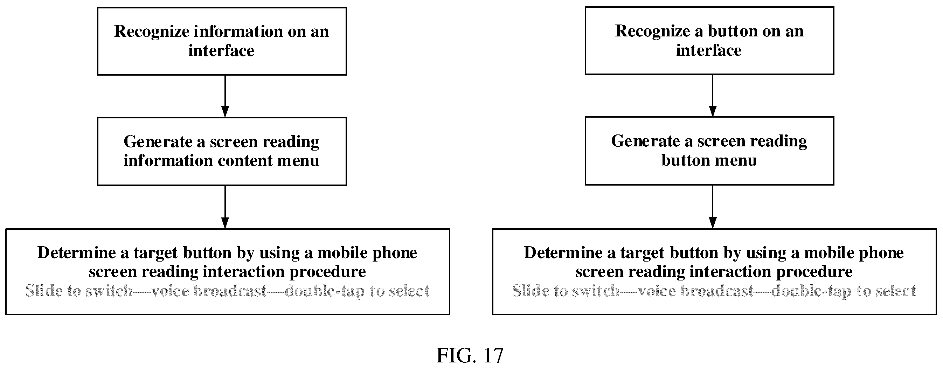

In some scenarios, if many functions need to be provided for a user, information on an operation screen needs to be recognized, and converted into a barrier-free information content menu on a mobile phone. After the menu is generated, the user is informed that the recognition is completed, for example, a voice prompt "recognition is completed, slide left and right to browse each content, and double-tap to lock a content". The user may slide left and right on the mobile phone to browse each menu item on the menu, read a current button name via voice, and double-tap the screen to lock a button item. As shown in FIG. 17, information on an interface may be recognized and all recognized information is browsed, or a button on an interface may be directly recognized and browsing is performed in the button.

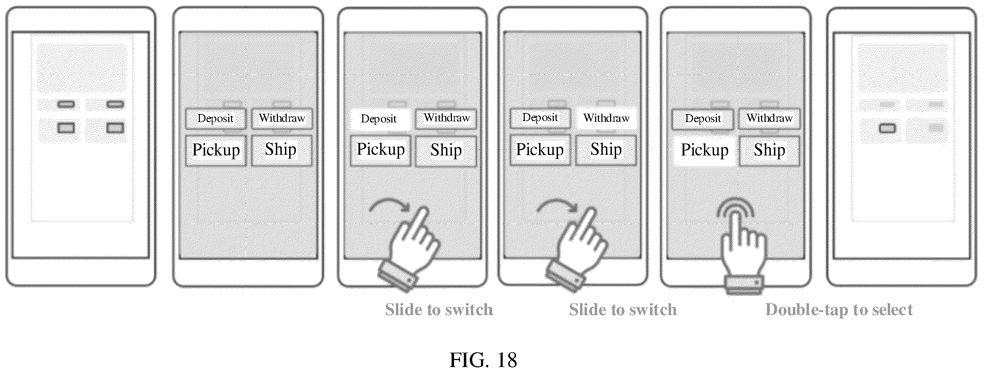

FIG. 18 is a diagram of interface button recognition of a parcel locker.

After a target button is locked, a device tracks the target button on a touchscreen, and guides the user to approach the target button, and finally tap the button via a touch point on the mobile phone. A manner of tracking the target button is generally implemented by using a computer vision technology.

In a process of guiding the user to approach the target button and tap the button, on one hand, the user needs to be guided to approach the touchscreen step by step, and on the other hand, the user needs to be guided to "align" the target button, to ensure that the user can tap/touch the target button. A manner of guiding the user to align the target button is to enable the target button to always be within a "target range" in/out of a shooting picture of a camera.

Presetting of the target range is related to a size and location of the camera of the mobile phone, the touch point, and the target button. The target range varies with different touchscreen interfaces, different mobile phone and camera locations, whether a wide angle is used, a touch point location, and a manner. Therefore, setting of the target range varies with the application scenario.

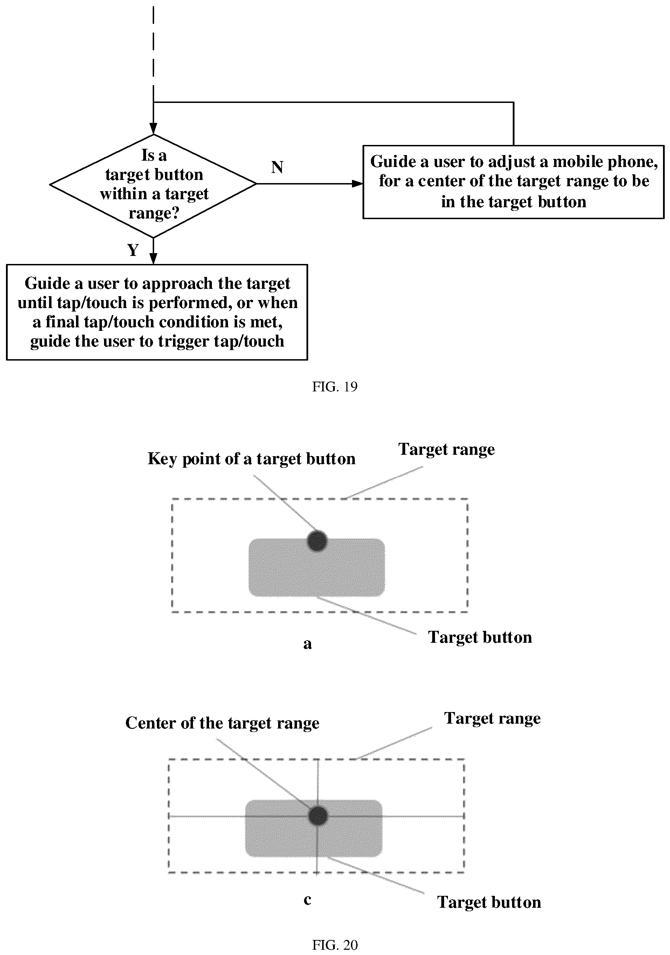

After the target range is determined, as shown in FIG. 19, the user may be guided to adjust the location of the mobile phone according to the following steps, to tap the target button.

First, it is determined whether the target button (or a key point of the target button) is within the target range. If the target button (or the key point of the target button) is within the target range, as shown in a in FIG. 20, the user may be guided to approach the target until tap/touch is performed, or when a final tap/touch condition is met, and the user is guided to trigger tap/touch. Otherwise, the user is guided to adjust the mobile phone, so that the center of the target range is in the target as shown in the following figure c.

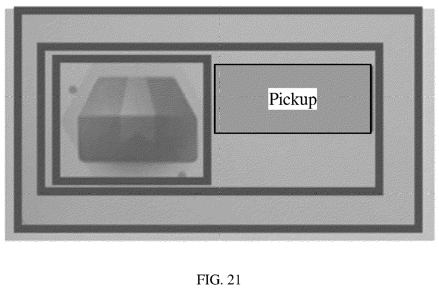

For a range of a defined target button, as shown in FIG. 21, in some technical solutions, a range of an actual button may be obtained, and in some technical solutions, an icon content range in an actual button, for example, a text on the button or an icon on the button, may be obtained.

A possible implementation of a manner of determining whether tap/touch is successful is as follows: Generally, after the tap/touch is triggered successfully, an interface is switched to another page. Therefore, whether the tap/touch is successful may be determined depending on whether a sudden change occurs in a shooting picture of a mobile phone. If the sudden change occurs and data of a motion sensor of the mobile phone is combined, that is, the mobile phone does not obviously shake (which causes a sharp change in a picture of the mobile phone), it may be determined that the tap/touch is successful.

In some scenarios, it may be determined whether the final tap/touch condition is met, and then the user is guided to perform a step of tap/touch operation to complete tap/touch. The final tap/touch condition herein is generally a distance between the mobile phone and the touchscreen, where a distance calculation manner may be completed via a depth camera, or may be completed by calculating a size and a proportion of image content by using computer vision.

In the foregoing manner, a touchscreen interface of an external device is recognized and transferred to the mobile phone, to form a barrier-free menu, and the user is allowed to search for a required function entry on the terminal. An operation interface with an unknown range, an unknown object, and an extremely easy-to-use mis-touch is converted into an operation interface that is commonly used and easy to use by a visually impaired user, to conform to a daily interaction habit of the visually impaired user and reduce learning costs. The visually impaired user not only "sees" the operation interface, but also "finds" different functions on the interface easily. This implements zero contact with the touchscreen of the external device and accurately obtains interface information on the touchscreen.

In a possible implementation, the touch component is a support attached to a back of the terminal or a corner of the terminal. An external component (for example, a mobile phone support) whose location is fixed relative to the camera or a structure of the mobile phone (for example, a corner of the mobile phone) is used together with a computer vision technology, to replace a finger to touch a target button on the screen. The fixed component or the structure is used instead of the finger to perform interaction on the touchscreen, and the target is tapped through recognition of the computer vision, so that a user is guided to approach the target. The user only needs to move the mobile phone based on guidance of a voice prompt. The operation is simple and the process is intuitive. The user does not need to learn or memorize any special operation, and does not need to be in contact with the touchscreen. This greatly reduces cognitive burden of a user during operation.

The following describes a specific example by using an example in which the touch component is the support attached to the back of the terminal.

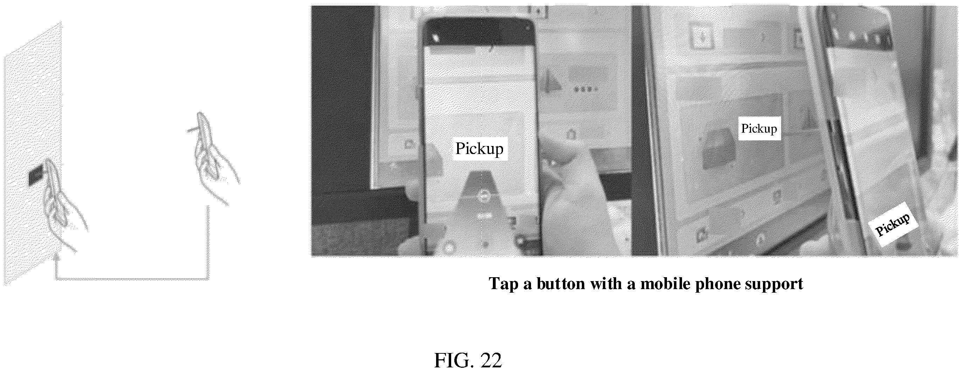

As shown in FIG. 22, a folding support is fixed on a back of a mobile phone. After the mobile phone support is opened, the mobile phone support is within a range that can be captured by a camera. Generally, a length of the mobile phone support after being opened is greater than a protruding thickness when the mobile phone is held by a hand, and is generally greater than 4.5 cm. After this function is enabled on the mobile phone, whether there is a support in the picture or whether the support is in a target location is recognized to determine whether the support is opened. If the support is not opened, a user is prompted to open the support. After it is recognized that the user opens the support, the guiding process described in the foregoing embodiment is performed.

After a target button is determined, the user is guided to tap the target. Presetting of the target range is related to a size and location of the camera of the mobile phone, the touch point, and the target button. The target range varies with different touchscreen interfaces, different mobile phone and camera locations, whether a wide angle is used, a touch point location, and a manner. Therefore, setting of the target range varies with the application scenario.

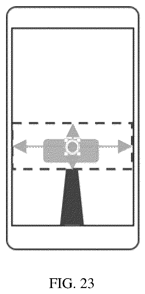

In this embodiment, the mobile phone support is located at a location that is less than 2 cm below the camera, an application scenario is a parcel locker, and a minimum effective tap/touch area of the button is about 2*5 cm. An object size of a shooting plane that is of a wide-angle lens and that is within a distance of the mobile phone support is about 5*10 cm. In this embodiment, as shown in FIG. 23, the target range may be defined as a rectangular range formed by an upper edge of the mobile phone support, a middle line of a screen, a left edge of the screen, and a right edge of the screen. For other basic conditions, the target range may be different.

The following describes a specific example by using an example in which the touch component is the corner of the terminal.

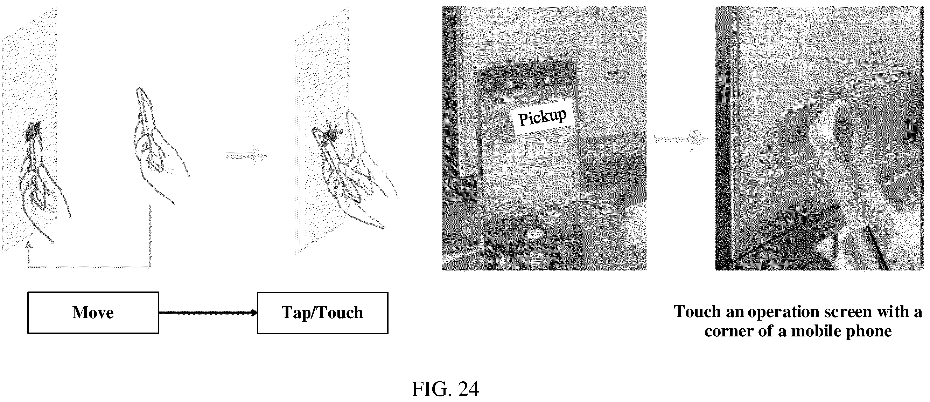

As shown in FIG. 24, tap/touch may be performed via a corner of a mobile phone. The user is guided to hold the mobile phone to approach the target button until a final touch tap/touch condition is met, and then the user is guided to tap/touch the screen via the corner of the mobile phone to tap the target button.

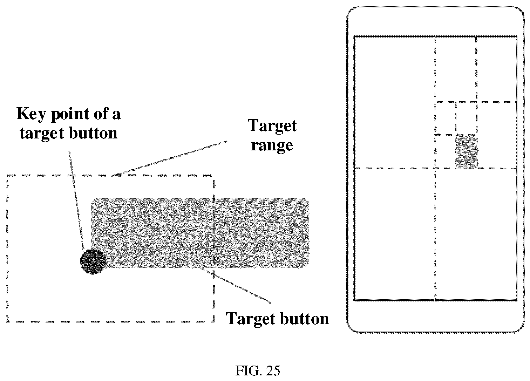

In this embodiment, a key point of the target button is set to a lower left corner of the target button, as shown on the left side of FIG. 25. In this embodiment, an upper right corner of the mobile phone is located in an upper right corner of a camera lens, and a horizontal distance is 3 cm and a vertical distance is 2.5 cm. An application scenario is a parcel locker, and a minimum effective tap/touch area of the button is about 2*5 cm. A diagram on the right side of FIG. 25 is obtained based on an experimental result of corner tap/touch distribution of the mobile phone. A dark-colored area is a target range. When a user holds the mobile phone at a location 5-6 cm away from the screen, if a key point of the button falls within the area, the user can touch the screen via the upper right corner of the mobile phone, to tap the target button. In this embodiment, for other basic conditions, the target range may be different.

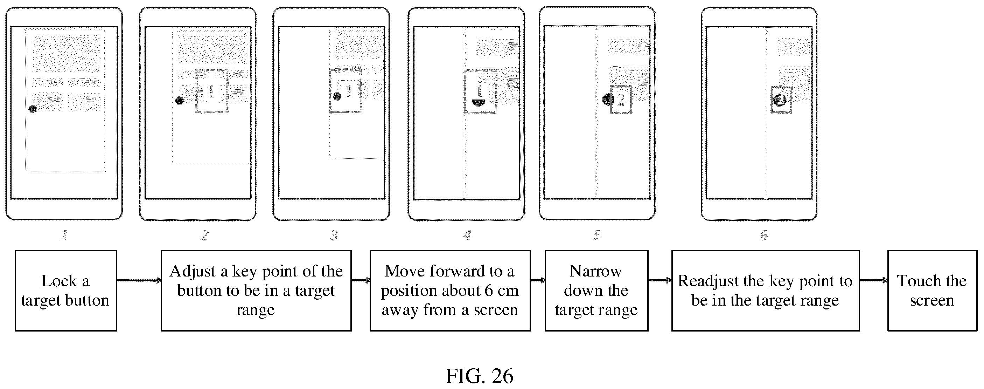

In the guiding process, to avoid repeated deviation correction in the approaching process, the target range is expanded by four times before the tap/touch distance is reached, as shown in 1 to 4 in FIG. 26. When the mobile phone moves to a distance (about 6 cm) from the target, the target range is narrowed down to a standard size, and the user is guided to re-adjust a location of a key point of the target button in a camera picture. After the adjustment is completed, the user is prompted to touch the screen with the upper right corner of the mobile phone.

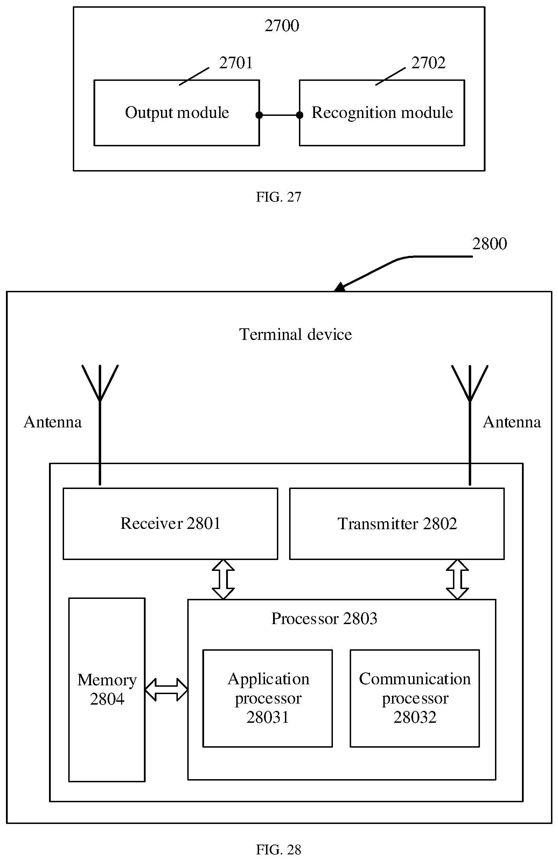

This application further provides an image recognition apparatus. The image recognition apparatus may be a terminal device. FIG. 27 is a diagram of a structure of the image recognition apparatus according to an embodiment of this application. As shown in FIG. 27, an image recognition apparatus 2700 includes an output module 2701 and a recognition module 2702.

The output module 2701 is configured to output a first reminder, where the first reminder indicates a user to establish a location association between an auxiliary part and a to-be-recognized object, and control a terminal to photograph the auxiliary part.

For a specific description of the output module 2701, refer to the description of step 301 in the foregoing embodiment. Details are not described herein again.

The recognition module 2702 is configured to: when the auxiliary part exists in a shot first image and a target object whose location relationship with the auxiliary part meets a first preset condition exists in the first image, obtain a recognition result of the target object based on a captured second image.

The first image and the second image are images in a video stream that is shot by the user controlling the terminal after the first reminder is output, and capture time of the second image is later than that of the first image.

For a specific description of the recognition module 2702, refer to the description of step 302 in the foregoing embodiment. Details are not described herein again.

In a possible implementation, the auxiliary part is a hand.

In a possible implementation, the first preset condition includes at least one of the following:
the target object overlaps the auxiliary part;
the target object is in a direction indicated by the auxiliary part; and
the target object is an object closest to the auxiliary part in a plurality of objects included in the first image.

In a possible implementation, the video stream further includes a third image whose capture time is earlier than that of the first image; and the output module is further configured to:
output a second reminder when the target object that meets the first preset condition does not exist in the third image, where the second reminder indicates the user to cancel the location association between the auxiliary part and the to-be-recognized object or move the auxiliary part toward an edge of the to-be-recognized object; and
the capture time of the second image is later than outputting the second reminder.

In a possible implementation, the output module is further configured to:
output a third reminder when a picture of the target object in the first image is incomplete or unclear, where the third reminder indicates the user to control the terminal to move away from or close to the to-be-recognized object; and
the capture time of the second image is later than outputting the third reminder.

In a possible implementation, the output module is further configured to:
output a fourth reminder based on a pose difference if a difference between a posture of the terminal when the terminal moves away from or close to the to-be-recognized object and a posture of the terminal before the terminal moves away from or close to the to-be-recognized object is greater than a threshold, where the fourth reminder indicates the user to control the terminal to perform posture adjustment, and an adjustment amount of the posture adjustment is related to the pose difference.

In a possible implementation,
the to-be-recognized object is a planar object, and the first reminder specifically indicates the user to cover the to-be-recognized object with the auxiliary part; or
the to-be-recognized object is a stereoscopic object, and the first reminder specifically indicates the user to pick up the to-be-recognized object with the auxiliary part or cover one surface of the stereoscopic object with the auxiliary part.

In a possible implementation, the output module is further configured to:
output a fifth reminder when the auxiliary part exists in the shot first image and the target object whose location relationship with the auxiliary part meets the first preset condition exists in the first image, where the fifth reminder indicates the user to cancel the location association between the auxiliary part and the to-be-recognized object; and
the capture time of the second image is later than outputting the fifth reminder.

In a possible implementation, the target object is a screen, and the terminal includes a touch component; the recognition result is text content corresponding to a target control on the screen; and the output module is further configured to:
output the text content;
the apparatus further includes a receiving module, configured to receive a selection of the user for the target control; and
the output module is further configured to:
   output a sixth reminder based on a relative location between the touch component and the target control, where the sixth reminder indicates the user to control the terminal to perform location adjustment until the touch component is in contact with the target control, and an adjustment amount of the location adjustment is related to the relative location; and
   according to the target control.

In a possible implementation, the touch component is a support attached to a back of the terminal or a corner of the terminal.

The following describes a terminal device provided in an embodiment of this application. The terminal device may be the image recognition apparatus in FIG. 27. FIG. 28 is a diagram of a structure of the terminal device according to an embodiment of this application. A terminal device 2800 may be specifically represented as a virtual reality VR device, a mobile phone, a tablet computer, a notebook computer, an intelligent wearable device, or the like. This is not limited herein. Specifically, the terminal device 2800 includes a receiver 2801, a transmitter 2802, a processor 2803, and a memory 2804 (there may be one or more processors 2803 in the terminal device 2800, and one processor is used as an example in FIG. 28). The processor 2803 may include an application processor 28031 and a communication processor 28032. In some embodiments of this application, the receiver 2801, the transmitter 2802, the processor 2803, and the memory 2804 may be connected through a bus or in another manner.

The memory 2804 may include a read-only memory and a random access memory, and provide instructions and data to the processor 2803. A part of the memory 2804 may further include a non-volatile random access memory (non-volatile random access memory, NVRAM). The memory 2804 stores a processor and operation instructions, an executable module or a data structure, a subset thereof, or an extended set thereof. The operation instructions may include various operation instructions for implementing various operations.

The processor 2803 controls an operation of the terminal device. In a specific application, components of the terminal device are coupled together through a bus system. In addition to a data bus, the bus system may further include a power bus, a control bus, a status signal bus, and the like. However, for clear description, various buses are referred to as the bus system in the figure.

The method disclosed in embodiments of this application may be applied to the processor 2803, or may be implemented by the processor 2803. The processor 2803 may be an integrated circuit chip and has a signal processing capability. In an implementation process, the steps in the foregoing method may be implemented by using a hardware integrated logical circuit in the processor 2803, or by using instructions in a form of software. The processor 2803 may be a general-purpose processor, a digital signal processor (digital signal processor, DSP), a microprocessor, or a microcontroller, and may further include an application-specific integrated circuit (application-specific integrated circuit, ASIC), a field-programmable gate array (field-programmable gate array, FPGA) or another programmable logic device, a discrete gate or transistor logic device, or a discrete hardware component. The processor 2803 may implement or perform the methods, steps, and logical block diagrams that are disclosed in embodiments of this application. The general-purpose processor may be a microprocessor, or the processor may be any conventional processor or the like. The steps of the methods disclosed with reference to embodiments of this application may be directly performed and completed by a hardware decoding processor, or may be performed and completed by using a combination of hardware and software modules in the decoding processor. The software module may be located in a mature storage medium in the art, such as a random access memory, a flash memory, a read-only memory, a programmable read-only memory, an electrically erasable programmable memory, or a register. The storage medium is located in the memory 2804, and the processor 2803 reads information in the memory 2804 and completes the steps in the foregoing methods in combination with hardware of the processor. Specifically, the processor 2803 may read the information in the memory 2804, and complete the data processing-related steps in step 301 and step 302 in the foregoing embodiment in combination with the hardware of the processor 2803.

The receiver 2801 may be configured to: receive input digit or character information, and generate a signal input related to a related setting and function control of the terminal device. The transmitter 2802 may be configured to output digit or character information through a first interface. The transmitter 2802 may be further configured to send instructions to a disk group through the first interface, to modify data in the disk group. The transmitter 2802 may further include a display device like a display.

An embodiment of this application further provides a computer program product. When the computer program product runs on a computer, the computer is enabled to perform steps of the image recognition method described in the embodiment corresponding to FIG. 3 in the foregoing embodiments.

An embodiment of this application further provides a computer-readable storage medium. The computer-readable storage medium stores a program for signal processing. When the program is run on a computer, the computer is enabled to perform the steps of the image recognition method in the foregoing method embodiment.

The image recognition apparatus provided in embodiments of this application may be a chip. The chip includes a processing unit and a communication unit. The processing unit may be, for example, a processor, and the communication unit may be, for example, an input/output interface, a pin, or a circuit. The processing unit may execute computer-executable instructions stored in a storage unit, so that a chip in the execution device performs the data processing method described in the foregoing embodiments, or a chip in the training device performs the data processing method described in the foregoing embodiments. Optionally, the storage unit is a storage unit in the chip, for example, a register or a buffer. Alternatively, the storage unit may be a storage unit in a wireless access device but outside the chip, for example, a read-only memory (read-only memory, ROM), another type of static storage device that can store static information and instructions, or a random access memory (random access memory, RAM).

In addition, it should be noted that the described apparatus embodiment is merely an example. The units described as separate components may or may not be physically separate, and components displayed as units may or may not be physical units, may be located in one location, or may be distributed on a plurality of network units. Some or all of the modules may be selected based on actual needs to achieve the objectives of the solutions of embodiments. In addition, in the accompanying drawings of the apparatus embodiments provided in this application, connection relationships between modules indicate that the modules have communication connections with each other, which may be specifically implemented as one or more communication buses or signal cables.

Based on the description of the foregoing implementations, a person skilled in the art may clearly understand that this application may be implemented by software in addition to necessary universal hardware, or by dedicated hardware, including a dedicated integrated circuit, a dedicated CPU, a dedicated memory, a dedicated component, and the like. Generally, any functions that can be performed by a computer program can be easily implemented by using corresponding hardware. Moreover, a specific hardware structure used to achieve a same function may be in various forms, for example, in a form of an analog circuit, a digital circuit, or a dedicated circuit. However, as for this application, a software program implementation is a better implementation in most cases. Based on such an understanding, the technical solutions of this application essentially or the part contributing to the conventional technology may be implemented in a form of a software product. The computer software product is stored in a readable storage medium, such as a floppy disk, a USB flash drive, a removable hard disk, a ROM, a RAM, a magnetic disk, or an optical disc of a computer, and includes several instructions for instructing a computer device (which may be a personal computer, a server, a network device, or the like) to perform the methods described in embodiments of this application.

All or some of the foregoing embodiments may be implemented by using software, hardware, firmware, or any combination thereof. When software is used to implement embodiments, all or some of embodiments may be implemented in a form of a computer program product.

The computer program product includes one or more computer instructions. When the computer program instructions are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (Solid State Disk, SSD)), or the like.

## Claims

1. An image recognition method, wherein the method comprises:
outputting a first reminder, wherein the first reminder indicates a user to establish a location association between an auxiliary part and a to-be-recognized object, and control a terminal to photograph the auxiliary part; and
when the auxiliary part exists in a shot first image and a target object whose location relationship with the auxiliary part meets a first preset condition exists in the first image, obtaining a recognition result of the target object based on a captured second image, wherein
the first image and the second image are images in a video stream that is shot by the user controlling the terminal after the first reminder is output, and capture time of the second image is later than that of the first image.

2. The method according to claim 1, wherein the auxiliary part is a hand.

3. The method according to claim 1 or 2, wherein the first preset condition comprises at least one of the following:
the target object overlaps the auxiliary part;
the target object is in a direction indicated by the auxiliary part; and
the target object is an object closest to the auxiliary part in a plurality of objects comprised in the first image.

4. The method according to any one of claims 1 to 3, wherein the video stream further comprises a third image whose capture time is earlier than that of the first image; and the method further comprises:
outputting a second reminder when the target object that meets the first preset condition does not exist in the third image, wherein the second reminder indicates the user to cancel the location association between the auxiliary part and the to-be-recognized object or move the auxiliary part toward an edge of the to-be-recognized object; and
the capture time of the second image is later than the outputting a second reminder.

5. The method according to any one of claims 1 to 4, wherein the method further comprises:
outputting a third reminder when a picture of the target object in the first image is incomplete or unclear, wherein the third reminder indicates the user to control the terminal to move away from or close to the to-be-recognized object; and
the capture time of the second image is later than the outputting a third reminder.

6. The method according to claim 5, wherein the method further comprises:
outputting a fourth reminder based on a pose difference if a difference between a posture of the terminal when the terminal moves away from or close to the to-be-recognized object and a posture of the terminal before the terminal moves away from or close to the to-be-recognized object is greater than a threshold, wherein the fourth reminder indicates the user to control the terminal to perform posture adjustment, and an adjustment amount of the posture adjustment is related to the pose difference.

7. The method according to any one of claims 1 to 6, wherein
the to-be-recognized object is a planar object, and the first reminder specifically indicates the user to cover the to-be-recognized object with the auxiliary part; or
the to-be-recognized object is a stereoscopic object, and the first reminder specifically indicates the user to pick up the to-be-recognized object with the auxiliary part or cover one surface of the stereoscopic object with the auxiliary part.

8. The method according to any one of claims 1 to 7, wherein the method further comprises:
outputting a fifth reminder when the auxiliary part exists in the shot first image and the target object whose location relationship with the auxiliary part meets the first preset condition exists in the first image, wherein the fifth reminder indicates the user to cancel the location association between the auxiliary part and the to-be-recognized object; and
the capture time of the second image is later than the outputting a fifth reminder.

9. The method according to any one of claims 1 to 8, wherein the target object is a screen, and the terminal comprises a touch component; the recognition result is text content corresponding to a target control on the screen; and the method further comprises:
outputting the text content, and receiving a selection of the user for the target control; and
outputting a sixth reminder based on a relative location between the touch component and the target control, wherein the sixth reminder indicates the user to control the terminal to perform location adjustment until the touch component is in contact with the target control, and an adjustment amount of the location adjustment is related to the relative location.

10. The method according to claim 9, wherein the touch component is a support attached to a back of the terminal or a corner of the terminal.

11. An image recognition apparatus, wherein the apparatus comprises:
an output module, configured to output a first reminder, wherein the first reminder indicates a user to establish a location association between an auxiliary part and a to-be-recognized object, and control a terminal to photograph the auxiliary part; and
a recognition module, configured to: when the auxiliary part exists in a shot first image and a target object whose location relationship with the auxiliary part meets a first preset condition exists in the first image, obtain a recognition result of the target object based on a captured second image, wherein
the first image and the second image are images in a video stream that is shot by the user controlling the terminal after the first reminder is output, and capture time of the second image is later than that of the first image.

12. The apparatus according to claim 11, wherein the auxiliary part is a hand.

13. The apparatus according to claim 11 or 12, wherein the first preset condition comprises at least one of the following:
the target object overlaps the auxiliary part;
the target object is in a direction indicated by the auxiliary part; and
the target object is an object closest to the auxiliary part in a plurality of objects comprised in the first image.

14. The apparatus according to any one of claims 11 to 13, wherein the video stream further comprises a third image whose capture time is earlier than that of the first image; and the output module is further configured to:
output a second reminder when the target object that meets the first preset condition does not exist in the third image, wherein the second reminder indicates the user to cancel the location association between the auxiliary part and the to-be-recognized object or move the auxiliary part toward an edge of the to-be-recognized object; and
the capture time of the second image is later than outputting the second reminder.

15. The apparatus according to any one of claims 11 to 14, wherein the output module is further configured to:
output a third reminder when a picture of the target object in the first image is incomplete or unclear, wherein the third reminder indicates the user to control the terminal to move away from or close to the to-be-recognized object; and
the capture time of the second image is later than outputting the third reminder.

16. The apparatus according to claim 15, wherein the output module is further configured to:
output a fourth reminder based on a pose difference if a difference between a posture of the terminal when the terminal moves away from or close to the to-be-recognized object and a posture of the terminal before the terminal moves away from or close to the to-be-recognized object is greater than a threshold, wherein the fourth reminder indicates the user to control the terminal to perform posture adjustment, and an adjustment amount of the posture adjustment is related to the pose difference.

17. The apparatus according to any one of claims 11 to 16, wherein
the to-be-recognized object is a planar object, and the first reminder specifically indicates the user to cover the to-be-recognized object with the auxiliary part; or
the to-be-recognized object is a stereoscopic object, and the first reminder specifically indicates the user to pick up the to-be-recognized object with the auxiliary part or cover one surface of the stereoscopic object with the auxiliary part.

18. The apparatus according to any one of claims 11 to 17, wherein the output module is further configured to:
output a fifth reminder when the auxiliary part exists in the shot first image and the target object whose location relationship with the auxiliary part meets the first preset condition exists in the first image, wherein the fifth reminder indicates the user to cancel the location association between the auxiliary part and the to-be-recognized object; and
the capture time of the second image is later than outputting the fifth reminder.

19. The apparatus according to any one of claims 11 to 18, wherein the target object is a screen, and the terminal comprises a touch component; the recognition result is text content corresponding to a target control on the screen; and the output module is further configured to:
output the text content;
the apparatus further comprises a receiving module, configured to receive a selection of the user for the target control; and
the output module is further configured to:
output a sixth reminder based on a relative location between the touch component and the target control, wherein the sixth reminder indicates the user to control the terminal to perform location adjustment until the touch component is in contact with the target control, and an adjustment amount of the location adjustment is related to the relative location; and
according to the target control.

20. The apparatus according to claim 19, wherein the touch component is a support attached to a back of the terminal or a corner of the terminal.

21. An image recognition device, wherein the device comprises a processor, a memory, a camera, an output device, and a bus, wherein
the processor, the memory, and the camera are connected through the bus;
the camera is configured to capture a video in real time;
the memory is configured to store a computer program or instructions; and
the processor is configured to invoke or execute the program or the instructions stored in the memory, and is further configured to invoke the camera and the output device, to implement the steps of the method according to any one of claims 1 to 10.

22. A computer-readable storage medium, comprising a program, wherein when the program is run on a computer, the computer is enabled to perform the method according to any one of claims 1 to 10.

23. A computer program product comprising instructions, wherein when the computer program product runs on a terminal, the terminal is enabled to perform the method according to any one of claims 1 to 10.
